(19) **Europäisches Patentamt European Patent Office Office européen des brevets**

(11) **EP 3 853 808 B1**

(12) **EUROPEAN PATENT SPECIFICATION**

(45) Date of publication and mention
of the grant of the patent:
**10.12.2025 Bulletin 2025/50**

(21) Application number: **18934155.5**

(22) Date of filing: **21.09.2018**

(51) International Patent Classification (IPC):
**G06T 3/4053** (2024.01)        **G06V 40/16** (2022.01)

(52) Cooperative Patent Classification (CPC):
**G06T 3/4053; G06V 40/165; G06V 40/172; G06V 40/174**

(86) International application number:
**PCT/CN2018/107113**

(87) International publication number:
**WO 2020/056769 (26.03.2020 Gazette 2020/13)**

(54) **METHOD AND SYSTEM OF FACIAL RESOLUTION UPSAMPLING FOR IMAGE PROCESSING**

VERFAHREN UND SYSTEM FÜR DAS GESICHTSAUFLÖSUNGS-UPSAMPLING ZUR BILDVERARBEITUNG

PROCÉDÉ ET SYSTÈME DE SURÉCHANTILLONNAGE DE RÉSOLUTION FACIALE POUR TRAITEMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.07.2021 Bulletin 2021/30**

(73) Proprietor: **INTEL Corporation**
**Santa Clara, CA 95054-1549 (US)**

(72) Inventors:
• **ASHKENAZI, Tzach**
**4975208 Petach Tikva (IL)**
• **BORTMAN, Maria**
**7852833 Askelon (IL)**
• **LI, Wenlong**
**Beijing 100028 (CN)**
• **TONG, Xiaofeng**
**Beijing 100086 (CN)**
• **SHILONI, Asaf**
**6937334 Tel Aviv (IL)**

(74) Representative: **HGF**
**HGF Limited**
**4th Floor, 1 City Square**
**Leeds LS1 2AL (GB)**

(56) References cited:
WO-A1-2017/143407        CN-A- 101 079 109
CN-A- 106 557 766        CN-A- 107 563 978
CN-A- 107 563 978        CN-A- 107 895 358
US-A1- 2014 245 367        US-A1- 2014 245 367
US-A1- 2015 363 634        US-A1- 2017 255 827
US-A1- 2017 256 033

• STEFANO MESSELODI ET AL: "Scene text recognition and tracking to identify athletes in sport videos", MULTIMEDIA TOOLS AND APPLICATIONS., vol. 63, no. 2, 20 September 2011 (2011-09-20), US, pages 521 - 545, XP055489736, ISSN: 1380-7501, DOI: 10.1007/s11042-011-0878-y
• ONCEL TUZEL ET AL: "Global-Local Face Upsampling Network", 23 March 2016 (2016-03-23), pages 1 - 23, XP055369126, Retrieved from the Internet <URL:https://arxiv.org/abs/1603.07235v1> [retrieved on 20170503]

**Description**

BACKGROUND

Multi-camera systems are being used to provide three-dimensional views of an athletic event. Such a system can create just about any desired viewing angle of action taking place on an athletic field by generating virtual camera views. The system can even freeze the action on the field, and make it appear as if the camera is being rotated about the athletes. This may be performed by using an array of cameras placed around an athletic field such as in a stadium or arena. The cameras are often placed relatively far from the athletic field in order to capture a large area of the field and so that the cameras do not block the view of spectators at the athletic event. However, this results in capturing images of an athlete's face that are too small, or in other words, with a low resolution such as a mere 160 x 100 pixels total for the athlete's entire body such that the athlete's face appears distorted and unclear. This is particularly noticeable when the athletes are famous people with faces easily recognized by users viewing these images so that the images appear to be of poor quality.

US 2017/255827A1 discloses a method for processing a video feed through a spatiotemporal pattern recognition algorithm that uses machine learning to develop an understanding of an event within the video feed, where the understanding event includes identifying context information relating to the event. Content displaying the event is automatically extracted and the extracted content is associated with the context information relating to the event under computer control. A video content data structure that includes the context information relating to the event is produced.

US 2014/245367A1 relates to a method for providing a video, a transmitting device, and a receiving device for creating, transmitting, and playing video content.

STEFANO MESSELODI ET AL: "Scene text recognition and tracking to identify athletes in sport videos", in MULTIMEDIA TOOLS AND APPLICATIONS., vol. 63, no. 2, 20 September 2011, pages 521-545, XP055489736,US ISSN: 1380-7501, DOI: 10.1007/s11042-011-0878-y discloses an athlete identification module forming part of a system for the personalization of sport video broadcasts. The aim of this module is the localization of athletes in the scene, their identification through the reading of names or numbers printed on their uniforms, and the labelling of frames where athletes are visible. WO 2017/143407A1 relates to a method and apparatus for processing video image data, so as to apply different types of processing to different aspects of video image data. A detection process is arranged to detect an item, object or event appearing or occurring in a scene being viewed by an image device. An image data process is responsive to the detection of the object or event and to control information to process the image data for a portion of the scene where the object or event appears or occurs, differently from the processing of the image data associated with the rest of scene. The object may be a person's face, and the face image data may be processed to produce high resolution data, the rest of the scene being provided in low resolution. This saves on processing, transmission and storage.

DESCRIPTION OF THE FIGURES

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:

FIG. 1 is a drawing of a stadium with a camera-array placed around an athletic field and to be used to perform the method of facial resolution upsampling for image processing according to at least one of the implementations provided herein;

FIG. 2A is an image of an athlete on an athletic field and captured by a multi-camera system video recording an athletic event;

FIG. 2B is a low resolution image of the face of the athlete of FIG. 2A:

FIG. 3 is a flow chart of a method of facial resolution upsampling for image processing according to at least one of the implementations herein;

FIG. 4 is a detailed flow chart of a method of facial resolution upsampling for image processing according to at least one of the implementations herein;

FIG. 5 is a flow chart of personal face model or image generation for a method of facial resolution upsampling for image processing according to at least one of the implementations herein;

FIG. 6 is a schematic diagram of a person identification unit according to at least one of the implementations herein;

FIG. 7 is an image demonstrating landmarks for a method of facial resolution upsampling for image processing according to at least one of the implementations herein;

FIG. 8 is an example set of images demonstrating blendshapes for a method of facial resolution upsampling for image processing according to at least one of the implementations herein;

FIG. 9 a flow chart of mapping facial expression and blending of low resolution images to a personal face model or image for a method of facial resolution upsampling for image processing according to at least one of the implementations herein;

FIG. 10A is a flow chart showing a neural network process for adjusting color for high resolution facial images for a method of facial resolution upsampling for image processing according to at least one of the implementations herein;

FIG. 10B is a schematic diagram of the neural network process for adjusting color for high resolution facial images for a method of facial resolution upsampling for image processing according to at least one of the implementations herein;

FIG. 11 is an illustrative diagram of an example system;

FIG. 12 is an illustrative diagram of another example system; and

FIG. 13 illustrates another example device, all arranged in accordance with at least some implementations of the present disclosure.

DETAILED DESCRIPTION

One or more implementations are now described with reference to the enclosed figures. While specific configurations and arrangements are discussed, it should be understood that this is done for illustrative purposes only. Persons skilled in the relevant art will recognize that other configurations and arrangements may be employed as long as they are according to the appended claims. It will be apparent to those skilled in the relevant art that techniques and/or arrangements described herein also may be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices, professional electronic devices such as one or more television cameras, video cameras, or camera arrays that surround an event to be recorded by the cameras, and/or consumer electronic (CE) devices such as imaging devices, digital cameras, smart phones, webcams, video cameras, video game panels or consoles, televisions, set top boxes, and so forth, may implement the techniques and/or arrangements described herein, and whether a single camera or multi-camera system. Further, while the following description may set forth numerous specific details such as logic implementations, types and interrelationships of system components, logic partitioning/integration choices, and so forth, claimed subject matter may be practiced without such specific details. In other instances, some material such as, for example, control structures and full software instruction sequences, may not be shown in detail in order not to obscure the material disclosed herein. The material disclosed herein may be implemented in hardware, firmware, software, or any combination thereof.

The material disclosed herein may also be implemented as instructions stored on a machine-readable medium or memory, which may be read and executed by one or more processors. A machine-readable medium may include any medium and/or mechanism for storing or transmitting information in a form readable by a machine (for example, a computing device). For example, a machine-readable medium may include read-only memory (ROM); random access memory (RAM); magnetic disk storage media; optical storage media; flash memory devices; electrical, optical, acoustical or other forms of propagated signals (e.g., carrier waves, infrared signals, digital signals, and so forth), and others. In another form, a non-transitory article, such as a non-transitory computer readable medium, may be used with any of the examples mentioned above or other examples except that it does not include a transitory signal per se. It does include those elements other than a signal per se that may hold data temporarily in a "transitory" fashion such as RAM and so forth.

References in the specification to "one implementation", "an implementation", "an example implementation", and so forth, indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to affect such feature, structure, or characteristic in connection with other implementations whether or not explicitly described herein.

Systems, articles, and methods of facial resolution upsampling for image processing.

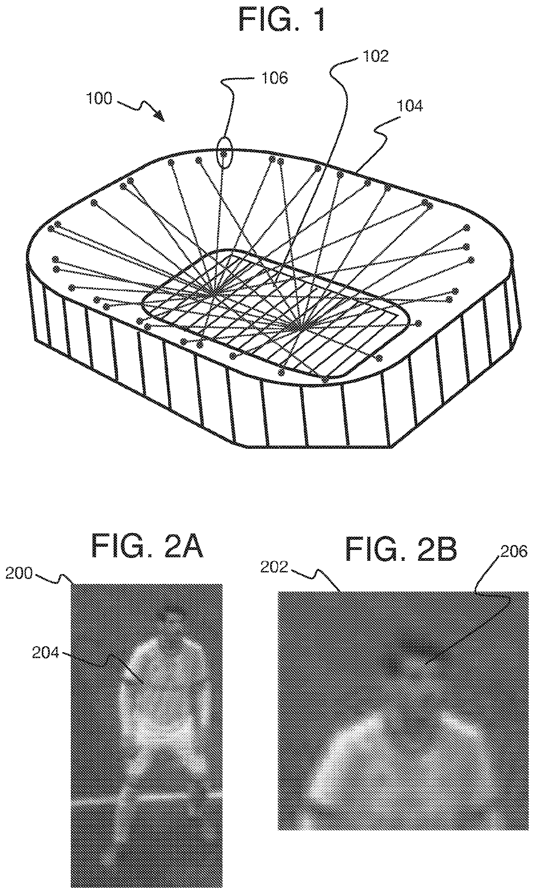

Referring to FIG. 1, a multi-camera system 100 used to record events, such as athletic events, may capture athletes in images from a number of different perspectives. The images then can be used to create images from virtual camera viewpoints permitting the athletes or events on the field to be viewed from just about any desired angle. System 100 may have cameras 106, such as 30 or 36 cameras, mounted around a field 102 at a stadium, arena, or other venue 104 that holds an event that is, or can be, viewed on still photo or video displays, such as live television or later on recorded videos. Such a camera system 100 may be mounted near the top of the stadium 104 above stands or other positions so that the cameras 106 are out of the line of sight of spectators at the stadium. The cameras 106 may be fixed so that registration between camera images is predetermined, and by one form, the cameras provide 5K resolution images. In the conventional system, the system may collect images from the array of cameras 106, segment the content of the images into objects, and apply 3D reconstruction of the objects to create a point cloud per multiple fixed camera inputs. Images from virtual camera positions can then be formed by projecting data from the point cloud to an image plane. When the faces of people on the images are distorted due to the small size of the face on the image and the limitations of the resolution of the image, this will result in virtual images of poor quality.

Referring to FIGS. 2A-2B for example, since the cameras 106 are often a relatively large distance from the event being recorded on the field, such as more than 100 meters, the body of an athlete or player in an image, where the face is only a small portion of the body, the face may be around 225 pixels in area when the person's body is about 160 x 100 pixels by one possible example of many. An image 200 shows such a low resolution image of an athlete's body 204 while a close-up image 202 shows such a resulting low resolution face 206. This provides a distorted, low quality image that results in noticeable poor quality when the image is used to form other virtual camera viewpoint images as described above. The conventional solution is by upsampling such face images which is performed by using regular super-resolution techniques such as example based, deep learning networks trained on a database of various faces, typically forming and using a generic model. A generic model is based on an average of a variety of real people's faces by identifying specific points (such as eyes, nose, the corners of the mouth, and so forth) in the image and mapping it to the model. This, however, results in nonrealistic faces when upscaled to large scales or from relatively low resolution images because the generic model causes too many inaccuracies relative to a specific person's face.

To resolve the issues mentioned above, and improve the resolution of a person's face in an image spaced far away from one or more cameras, external facial data for a specific individual is automatically factored to provide good quality, high resolution images of the person's face. Specifically, by one alternative, the method herein uses a predetermined high resolution (HR) personal 3D face model for specific individual people expected to be recorded such as target athletes, and by one form, uses personal facial expression blendshapes as part of the model and for each person to be captured by the cameras. Another option is to form a personal 3D mesh, and/or simply maintain a set of personal high resolution images. Otherwise, a combination of these techniques may be used. These personal models and/or images then may be used to upsample a low resolution face image when the person in the image is identified.

Thus, the method also includes performing a person identification operation that may include identifying a person in the image, and by one form, by detecting a jersey or other number worn by a player of a team sport to recognize the person in the image. This identification is used to select the correct corresponding predetermined HR face model or image set of that person. Other techniques may be used to reduce the number of candidates or provide confirmation of the identification as explained below. The detection of the facial expression based on the facial feature points along a video sequence of images may be used to position landmarks on any one input face, and which then may be transferred to the selected model via warping. The low resolution face from the full image then may be replaced by the high resolution face with the correct facial expression mapped to that moment and projected to a high resolution version of the full image or frame that has the body of the person and the background of the image.

Another way to describe the system and method disclosed herein is to state that the system detects a person's (or player's) face, and extracts landmarks from fixed camera input to detect facial expression. Then the facial expression is transferred to a high resolution face model with facial expressions cloned from the low resolution images. In a rendering stage, the low resolution face is replaced with the high resolution result, and the high resolution image is then used to render a corresponding point cloud to create a volumetric video of high resolution images with a high resolution face of the person in the images. These methods result in a visibly pleasing and identifiable high resolution, realistic image of a person even when starting with low resolution images.

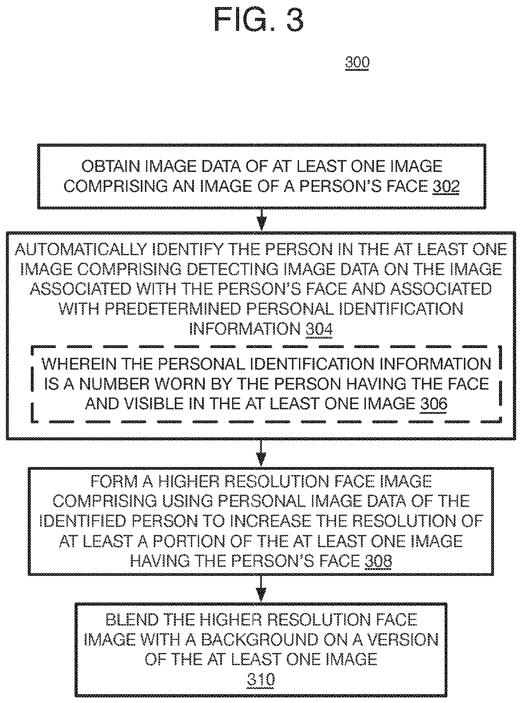

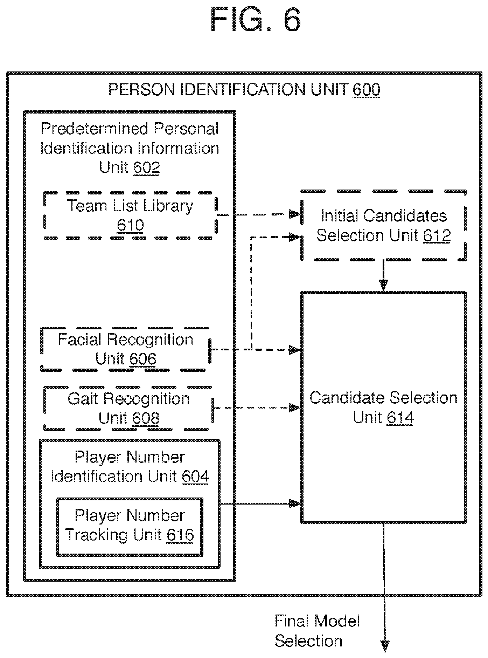

Referring now to FIG. 3, by one approach an example process 300 is a computer-implemented method of face resolution upsampling for image processing. In the illustrated implementation, process 300 may include one or more operations, functions or actions as illustrated by one or more of operations 302 to 310 numbered evenly. By way of non-limiting example, process 300 may be described herein with reference to example image processing systems 600 and 1100, 1200, or 1300 of FIGS. 6 and 11-13 respectively, and where relevant.

Process 300 may include "obtain image data of at least one image comprising an image of a person's face" 302. As desribed above, this may include the capturing of an athletic event by a single camera, or here from a camera array with many cameras spaced around an atheltic field to capture an athletic event, although other types of events could be captured as well such as concerts, plays, and so forth. At a minimum, the event being captured should be one where placing the camera too close to the action will block the view of spectators so that the cameras are placed relatively far from the field or stage, resulting in images with people's faces that are too small, and in turn, are formed of too low a resolution to provide a high quality image of the face without refinement of the face.

Process 300 may include "automatically identify the person in the at least one image comprising detecting image data on the image associated with the person's face and associated with predetermined personal identification information" 304. In other words, a high quality face image can be achieved by using predetermined external personal image data of a specific person in the at least one image when the person in the image can be identified. By one example, "the personal identification information is a textual character worn by the person having the face and visible in the at least one image" 306. This could be one or more numbers, letters, or symbols. By another option, this could include pictures or logos specific to a person wearing such indicia. By one form, a player number is used as the identifier when the event being captured is a team sport such as soccer, American football, baseball, basketball, hockey, rugby, cricket, and so forth. The player number is usually large relative to the player and other objects on the event field, making it relatively easy for an object detection program to detect and recognize. As optional preliminary or confirmation operations, a list of the players expected to play and be on the field, and in turn in the images, may reduce the number of candidate faces to be used, and face and/or gait recognition applications and/or additional player features such as height or field position may be applied to the images to attempt to indicate initial candidate selections for the identity of the person in the image or confirm the selection by textual identification.

Then, process 300 may include "form a higher resolution face image comprising using personal image data of the identified person to increase the resolution of at least a portion of the at least one image having the person's face" 308. This operation has two distinct parts: an offline or preliminary operation to establish personal image data, and then a run-time operation to form personal high resolution face images using the personal image data. Establishing the personal image data may involve preliminary, offline operations to establish high resolution 3D face models of specific people, such as athletes, that are expected to be on an athletic field to be video recorded or photographed. This may involve forming a texturized face avatar as the 3D model for each specific person and may include establishing a base model and personal blendshapes that each present a facial model of the person with a different facial expression. By other options, personal 3D mesh models may be formed, and by yet another option a library of high resolution images are saved for each specific person rather than building a model and to cover a variety of facial expressions. By yet another option, a combination of these techniques may be used where one technique, such as the avatar, is the main technique confirmed or refined by the other techniques, such as with feature point placements. The details for establishing the personal image data are provided below.

It will be appreciated that the term avatar herein may refer to a photo-realistic representation, character, or model of a person that is generated by using video or photos of a user, but could be an animation instead that mimics the facial expressions of a person being recorded on video or photographs.

Then during a run-time, this operation also may include (1) obtaining a customized 3D model with a base avatar model and blendshapes as the personal image data and to clone the facial expression of the low resolution face image to a high resolution image using the model and the personal blendshapes, or (2) mapping or warping the low resolution face images to a customized 3D mesh model that is the personal image data and to then form high resolution images by projecting the face from the 3D mesh model, or (3) blending the low resolution image with a previously saved high resolution image obtained offline that is the personal image data and that is a closest image to the facial expression in the low resolution image to generate a high resolution image with the facial expression from the low resolution image. Also, a combination of these techniques may be used, such as at least two of them, where the resulting feature points from the techniques are combined such as averaged, or where one technique is used to confirm the results of another technique by the use of thresholds for example.

Finally, this operation may include adjusting the color of the resulting high resolution image. This may be performed by using a convolutional neural network (CNN) where the input high resolution image is converted into multiple low resolution channel images, similar to having multiple color channels, and then concatenated with the initial low resolution image. These images (or channels) have the same size by one form. This is input to the CNN described below, and the output is reconstructed to match the size of the input high resolution face image. The result is a high resolution face image with color adjusted based on the correct colors form the low resolution image.

Process 300 next may include "blend the higher resolution face image with a background on a version of the at least one image" 310. For this operation, the entire (or main or full) low resolution image input to the system and showing both the face and background (and/or remainder of the athletes' body in the image) may be upsampled by super-resolution techniques for example, to form a full high resolution image with the background. This image is then blended with the high resolution face image based on the personal image data. In this case, when the low resolution image is upsampled, the low resolution face also is upsampled with the background on the main high resolution image. The resulting upsampled face (upsampled with the background) is replaced on the full high resolution image, and replaced by the high resolution face image from the personal image data. The details are explained below.

This may be performed for each low resolution image being provided from one or more cameras, and may be repeated for each person in an image. In the latter case, a personal high resolution image is formed for each person, and multiple such images may be blended onto a single full high resolution image. The resulting full high resolution images then may be used to form a point cloud or 3D model to form virtual camera view images from almost any angle and with a high quality face of a person in the images.

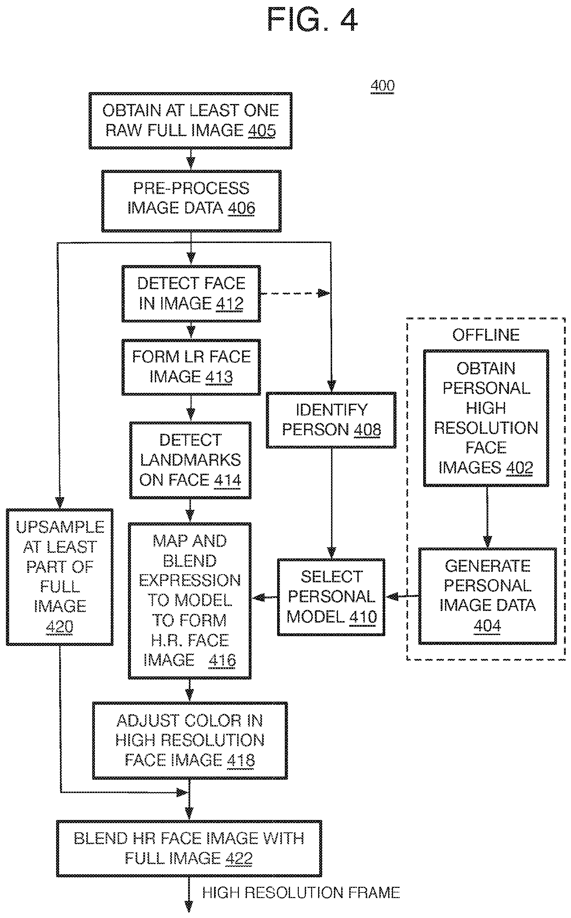

Referring now to FIG. 4, by one approach an example process 400 is a computer-implemented method of face resolution upsampling for image processing. In the illustrated implementation, process 400 may include one or more operations, functions or actions as illustrated by one or more of operations 402 to 422 generally numbered evenly. By way of non-limiting example, process 400 may be described herein with reference to example image processing systems 600 and 1100, 1200, or 1300 of FIGS. 6 and 11-13 respectively, and where relevant.

As mentioned, the present upsampling method may include preliminary operations to form external personal image data that can provide high resolution face image data in the form of 3D models or facial expression images with different facial expressions. Thus, process 400 may initially include "obtain personal high resolution face images" 402. This may include obtaining 30 or more high resolution images of each person of interest. The images should cover a variety of facial expressions of the person, and by one form, with a different facial expression on each image. By one form, the face in the images is at least 150 x 150 pixels. When the people in the images are famous athletes, actors, and so forth, it is typically easy to find or purchase such images by a simple internet search for different facial expressions of the particular person. Such facial expressions should cover different poses for the mouth (happy, sad, etc.), eye gaze direction, eyebrow position, and so forth. The images also may cover different angles relative to the face (straight on, left and right profiles, from above, and from below). When the people to be in the images are not famous, images may be obtained by having the person pose for video or photos and to provide a variety of facial expressions as mentioned.

Thereafter, process 400 may include "generate personal image data" 404. This may include personal high resolution 3D models of a person's face whether based on an avatar and blendshapes, or a mesh model, any of which may establish a variety of facial expressions. Other options may include simply maintaining the set of high resolution images of a person's face and covering a variety of facial expressions. By other alternatives, these techniques may be combined. A number of different ways may be used to establish such models and/or images, and a few examples are provided below with process 500.

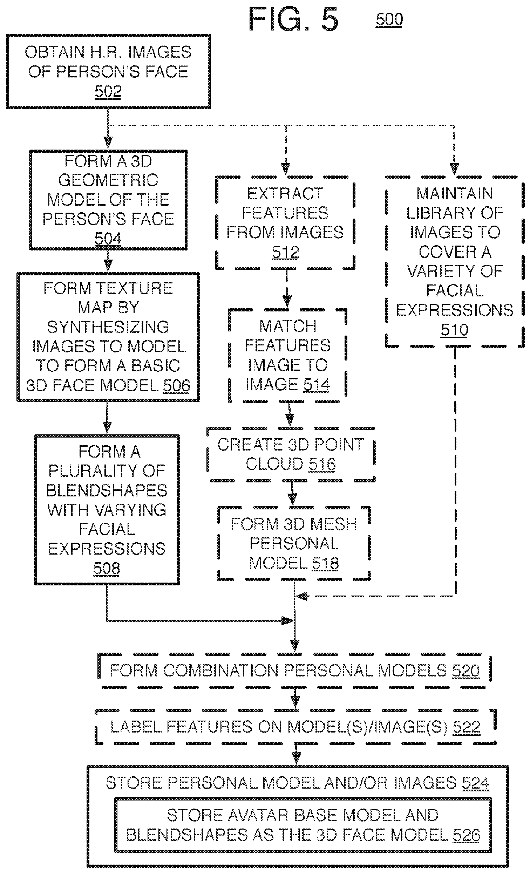

Referring to FIG. 5, an example process 500 for generating predetermined personal image data provides image data for a specific person's face. Such data may be stored for later use during run-time, such as during an athletic event, where lower resolution images are formed of a person, but can be upsampled to a higher resolution by using the predetermined, prestored personal image data. Thus, the process 500 may include offline operations that are performed before the personal image data is needed, although it is noted that such operations could be performed on the fly during run-time while an array of cameras is recording an event on a field for example as long as high resolution face images could be obtained and processed to form (or refine) 3D models before the personal image data is needed in order to upsample low resolution images. For example, such high resolution images may be obtained at the beginning of such an event being recorded to be used later in time during the same event or by one or more zoom cameras covering specific parts of the field (when player is visible in these parts of the field). Thus, process 500 may begin with "obtain high resolution images of person's face" 502, and as described above with operation 402.

Then, by one form, process 500 may include operations 504-510 to provide a face avatar in the form of a base model with pre-established personal blendshapes as the model forming the personal image data. Stated another way, the predetermined 3D personal model in this case is formed of a 3D base model and a plurality of blendshapes that each provide a different facial expression.

Particularly, process 500 may include "form a 3D geometric model of the person's face" 504. This may be performed manually by using a computer-implemented 3D modeling tool, such as Maya® to name one example. Such a program may start with a generic face model, and permit a user to manually move points on the model to shape facial features on the model. Such a model may be a mesh model formed of triangles that can be adjusted by the user. The user may attempt to shape the model to match the shape of a specific person's face by viewing the high resolution images and performing the matching by eye. Thus, the user can project the 3D avatar into a specific view-angle in one image to check if the error is large, and iteratively refine the model. Another approach is to automatically form the geometric model by using algorithms such as structure from motion (SfM) algorithms to build the face model. In either technique, the goal is to match the personal facial features (also referred to herein as parameters) of a specific person so that the model looks like the specific person. It has been found that the manual methods can be more accurate.

Process 500 then may include "form texture map by synthesizing images to model to form a basic 3D face model" 506. This may include warping (or projecting) the high resolution images onto the model to provide the model texture (or colors). One example of such technique is provided by US Patent Publication No. US20130201187A1, published August 8, 2013, and titled "Image-based Multi-view 3D Face Generation", which is incorporated herein for all purposes.

The result is a personal 3D model that is considered the basic (or base) model with both shape and texture that corresponds to, or is customized for, a specific person. This process may be repeated for each person that could be captured on video or photos at an event mentioned above. While in one form at a minimum, a face is generated for the model. The model, however, could be a head and shoulder model, or could be more than the head and shoulder.

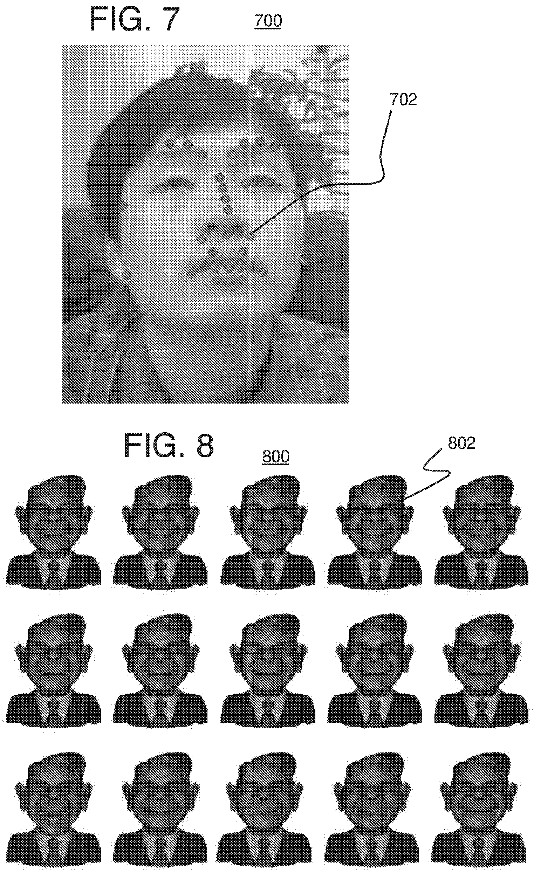

Process 500 may include "form a plurality of blendshapes with varying facial expressions" 508. A blendshape is a stored warping or morphing (or deforming) of the base or basic face model for example, and where each blendshape has a different deformation to form a different facial expression. Thus, one blendshape may have a raised right eyebrow, another blendshape may have a smile, and so forth. By one form, each blendshape has one facial expression change and the remainder of the blendshape face is the same as the base model which may be neutral or having no expression. FIG. 8 shows such blendshapes 802 of a set 800 of possible blendshapes. By one example, about 20 blendshapes are found to be adequate for the present method including smile, open-mouth, closed-eye, mouth shifted left, mouth shifted right, and so forth, but where each blendshape only has one of these changes. Alternatively, blendshapes could be formed with multiple changes instead as long as the blendshapes can be indexed for use and combined together to form a specific facial expression. The blendshapes may be formed manually be operating a modeling tool as mentioned above, or may be preformed automatically by a modeling application that may adjust each blendshape by a certain distance for certain landmarks for example. Once generated for each person that could be captured on camera, the personal base model and personal blendshapes are saved for use during run time (operation 526 below). Such generation of blendshapes is disclosed by U.S. Patent Publication No. 2017/0039750, published February 9, 2017, and titled "Avatar Facial Expression and/or Speech Driven Animations", which is incorporated herein for all purposes.

By yet another alternative, a personal 3D mesh face model is generated as the model for specific people and thereby forming the personal image data. For this purpose, process 500 may include "extract features from images" 512. The feature extraction may involve performing object segmentation and face detection algorithms to identify typical facial landmarks for example. Otherwise, landmarks may be set manually by a user on a modeling program. One example feature extraction technique is disclosed by U.S. Patent No. 9,361,510, issued June 7, 2016, and titled "Efficient facial landmark tracking using online shape regression method", which is incorporated herein for all reasons.

Process 500 may include "match features image to image" 514, and by using feature matching techniques such as sum of absolute differences (SAD)-type or other differencing algorithms. Once features from multiple images are matched, process 500 may include "create 3D point cloud" 516 thereby creating a 3D mapping of the features. Process 500 next may include "form 3D mesh personal model" 518 and connecting adjacent cloud points into triangles. This forms a high resolution 3D model of the face of the person in the high resolution images. This is repeated for each person that could be captured in the event images.

By yet another alternative, process 500 may include "maintain library of images to cover a variety of facial expressions" 510. Here, the high resolution images can be kept "as is", and the "closest" one is directly warped to the target facial expression during run-time. Specifically, by this option, no model is generated, and instead, the high resolution images are stored in a library and may be indexed by facial expression. In this case, the features or landmarks of the images relative to each other define a certain facial expression and may be labeled.

By yet another alternative, process 500 may include "form combination personal model" 520, and here a combination of these techniques may be used. By one example, a 3D mesh is formed as the model by the point cloud technique used above, and then the avatar is built from this 3D mesh and fine tuned to form a 3D base model and blend shapes where the fine tuning involves adjusting the feature point locations. By one form, a combination such as an average feature point location could be used. By other forms, one technique confirms the results of another technique. Thus, if a main technique, say the avatar for example, has feature points within a threshold of the corresponding feature points of the 3D mesh technique and/or the maintained high resolution image set technique, then the avatar feature point locations are kept as final. Any one of the techniques may be considered the main technique to be confirmed by one or both of the other techniques. Many different examples are possible.

In some of the techniques, process 500 may include "label features of model(s)/image(s)" 522 so that the models, blendshapes and/or stored images may have their landmark positions (or feature point coordinates) labeled, and such labels may be used to store the models, blendshapes, and images. The labels may be by head pose, landmark position (or facial expression), and so forth.

Process 500 may include "store personal model and/or images" 524, where each high resolution 3D personal model is stored for each person. When the 3D model is based on the avatar (or combination of techniques with the avatar), process 500 may include :store avatar base model and blendshapes as the 3D face model" 526 and that forms the personal image data. Each blendshape and base model for a specific person is stored for later matching with low resolution images obtained during a run-time of the camera array. When the other techniques are used, this operation also may include storing a 3D mesh model based on a point cloud and/or storing the high resolution images alone without model processing or in addition to models stored for the other techniques.

As mentioned, the blendshapes and images should cover a range of different facial expressions by covering different feature point positions for the facial landmarks whether mouth, eyes, eye brows and/or other landmarks. It will be understood that blendshapes and the images may be ordered in a library that permits faster access and location of certain matching images. Thus, images may be indexed by pose, facial expression, eye gaze direction, and/or other feature or parameters on one or multiple levels or directories (folders).

This operation also may include permitting access to the model, blendshapes, and/or high resolution images on a memory and that form the model for use for run-time of the camera or cameras. This also may include retrieving the model, blendshape, and/or HR images by transmitting them to a local device performing the processing of the upsampling when the personal image data is generated and/or stored remotely, such as at a server over the internet for example.

Continuing with process 400, during the run-time of the system operating the camera array to capture an event, process 400 may include "obtain at least one raw full image" 405. Particularly, the upsampling of low resolution faces may be applied to a single image. However, a video sequence of images from a multiple camera array may be obtained in order to upsample faces in multiple images, or to use multiple images to determine motion of facial features along a video sequence and to be used to upsample a face in one or more images.

Thus, the following process may be applied to each image or to images at some time interval (for each camera), such as every 10 images, every 100 images, or some other interval including intervals related to the processing speed (fps) such as every 30 or 60 images, and during a video sequence for example. By one form, facial landmark tracking is performed as explained below so that the interval for tracking facial feature points may be the same or different than the interval for actually upsampling the face images. Thus, facial features may be tracked every 10 frames, but upsampled every 100 frames. Other objects in the image may be tracked image to image as well such as the predetermined personal identification information, such as textual character(s) worn by the person providing the face (e.g., a jersey number) for example. Many variations exist. Other details are provided below.

The images or frames here may be obtained in raw color space (such as RGB) pixel data at a certain resolution, such as 5K here.

Thus, process 400 may include "pre-process image data" 406. This operation may include demosaicing, denoising, filtering, color space conversions (such as YUV to RGB), resolution conversions, division into frames, foreground extraction, and other pre-processing operations that may be needed to apply sufficient image processing to raw image data to form image data that can be used to adequately upsample the low resolution images to a high resolution 3D model or images, and otherwise provide frames at a desired high quality.

Referring to FIG. 6, process 400 may include "identify person" 408, and this may be performed by a person identification unit 600. The person identification unit 600 may have a predetermined personal identification information unit 602 that detects objects in the low resolution full image that could be associated with a face and could be used to identify the person providing the face. Thus, the person identification unit 600 may have a predetermined personal identification information unit 604. One type of information to be detected may be a textual-based identification such as a player number worn by a person in the low resolution image. Specifically, usually each player in a team sport wears a uniform or jersey with a unique number. Therefore, jersey number recognition can be used to identify every player on an athletic field even when facial resolution is too low to preform facial recognition since a number recognition is relatively less complicated than facial recognition and the numbers are typically very large relative to a person's face and body, making the player's number the easiest identifier to detect. The identifying number is then provided to a candidate selection unit 614 that looks up the number, on a table for example, and that lists the identity of the person associated with the number or the model, blendshapes, and/or high resolution images associated with the number, and in turn the identified person. By one form, the textual character(s) should be about at least 25 x 25 pixels for a person that is 625 pixels tall for accurate object detection of the textual character.

It will be appreciated that the personal information or identifier could be any alphanumeric or textual character including any visible letters, numbers, or symbols on the person on a field being captured by the cameras. This can include the person's name on his/her jersey. By other forms, the number may be worn anywhere on any cloths on the person, such as swimming caps, or may be written on the bare skin of the person, such as on the chest, back, arms, or legs as is often the case during certain races such as bicycle races, triathlons, or marathons. By other forms, the identification information (or number) may be near the person's face, at least in a wide shot of a race course, such as on the bicycle, motorcycle, or car being driven by the person to be identified.

As confirmation, or use as a preliminary operation, to the textual-based identification, a facial or other biometric recognition unit 606 could still be used when possible, and this may include operations of many different facial recognition algorithms (see Facial Recognition System, https://en wikipedia.org/wiki/Facial_recognition_system). The facial recognition unit 606 may receive initial face detection from the same operation 412 used to map the low resolution face to form a low resolution face image to be used for the high resolution facial expression upsampling. The facial recognition then applies the facial recognition algorithms to the detected faces. For the purposes of person identification, either facial recognition can be used to confirm the textual-based identification is correct or not, or the facial recognition may be used as a preliminary operation to first reduce the number of candidates to be analyzed for a final selection. The one or more possible faces recognized may be provided directly to the candidate selection unit 614 to determine if the textual-based identity is the same as the facial recognition identity. If not the same, the process may repeat. If the identity is the same, the person is then selected, and the associated personal image data is obtained.

Otherwise, the facial recognition selection may be provided to an initial candidates selection unit 612 that forms a list of possible candidates, such as those that are within some threshold of likeness or probability relative to a selected recognized face. This one or more list of candidate identities then may be provided to the candidate selection unit 614 for a final selection.

By other alternatives, a gait recognition unit 608 may be used and that analyzes the gait of the person over a sequence of images, and by one form, from a sequence of images from each camera separately. Such algorithms include George, A. S., et al., "An efficient gait recognition system for human identification using neural networks", International Journal of Innovations Advancement in Computer Science, 6(5), 76-83 (2017), and may be used in the same way as the facial recognition whether before or after the textual-based identification selection.

By yet another approach, an external list of candidate identities may be provided before hand (or predetermined before the event to be captured by the cameras), or at least before the low resolution images are to be upsampled. Thus, a team list including all of the players on the team may be stored at a team list library 610 and provided to the initial candidates selection unit 612. The numbers of the players on the team (or other listed identifier) may be provided to the candidate selection unit 614 so that the candidate selection unit 614 only lists these players as the possible candidates for textual-identification.

When the textual identification is occluded by other players on the field, the player may be tracked over a video sequence. Thus, a play number tracking unit 616 may be provided that identifies the player number through object recognition mentioned above, and that is applied to images from a same camera at certain time intervals if not performed each image in a sequence of images. Motion analysis then can be applied, whether by motion vector analysis such as with coding, or by other methods such as Deepsort (Simple Online Realtime Tracking with a Deep Association Metric, ICIP2017) tracking. A conclusion is then reached on whether or not the person in the current image has that detected player number, and this decision may be performed by applying thresholds or other techniques. Thus, when it is decided a certain player in current image has a number before or after an image being analyzed, it is inferred to be the correct number for that player on the current image even when the player number on the current image cannot be detected.

By an alternative to the tracking technique for an occluded identifier in an image, a multi-view technique may be used where images from other cameras at the same or substantially same time and of the same event may be analyzed by object detection for the identifier of the person in a current image when a camera array is being used instead of a single camera.

Thereafter, process 400 may include "select personal model 410", and based on the selection made by the person identification unit 600. Thus, the corresponding 3D high resolution model (or image) data is obtained for the identified person, whether it is the avatar based model (and personal blendshapes), 3D mesh, and/or the set of HR images, and/or other models that could be used here as well.

Returning to the processing of the low resolution image during run-time, process 400 may include "detect face in image" 412" and this may or may not be performed separately from the person identification operations described above with unit 600. This operation may include detecting the face of one or more people in the full low resolution image using a general face detection algorithm such as Viola/Jones face detection techniques and/or machine (deep) learning techniques such as DeepNet.

Once the face is detected, process 400 may include "form LR face image" 413. The low resolution face image forms at least part of the full image and that is to be analyzed and upsampled. By one form, the low resolution image is not saved, just the address is noted for working on those pixels. Alternatively, this operation could refer to either separating out a low resolution sub-image with the face into a separate file for example that is saved with a different stride (i.e., line width in memory). This low resolution face image may be about at least 60 x 60 pixels to extract facial landmarks, while examples herein use 150 x 150 pixels (or 150 x 100 pixels) for example.

Once a face is detected and the low resolution face image is defined, process 400 may include "detect landmarks on face" 414, and then "map and blend expression to model to form high resolution face image" 416. These operations are shown in more detail on process 900.

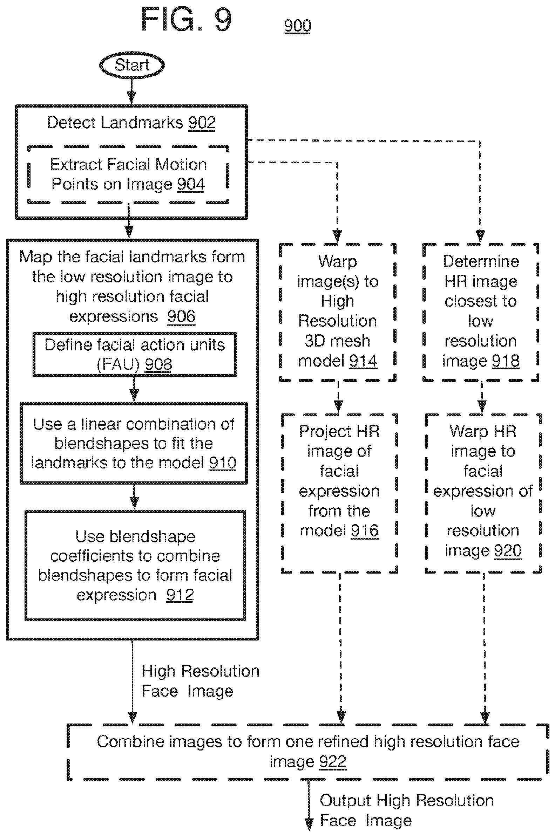

Referring to FIG. 9, process 900 may include "detect landmarks" 902, and is meant to be the same or similar as operation 414. This may include detecting facial landmarks with object detection, depth-sensing, depth-processing (creating a 3D map or space with objects in a captured scene), and background, foreground, and/or object segmentation (or keying) to name a few examples. Referring to FIG. 7, an image 700 shows a face 702 with example landmarks 704 that may be used to warp (or map and blend) the low resolution face image to a selected model or image. Such landmarks may include feature points that define the mouth, nose, eyes, eyebrows, ears, center of neck, hair line, and jaw line. By one form, as few as about 18 landmarks may be used, but could be 36, 48, or more landmarks.

By one approach, detecting the landmarks for the avatar and blendshape option may include "extract facial motion points on image" 904. This operation relates to tracking facial feature points from image to image (either consecutively or at some interval) and along a video sequence of images. This includes first identifying the feature points around different facial landmarks, and by one option, then tracking the motion from image to image when desired. This forms a facial expression of the low resolution image that is then tracked as it changes over time.

Process 900 then may include "map the facial landmarks from the low resolution image to high resolution facial expressions" 906. This operation also may be referred to as warping or projecting (or cloning) of the low resolution landmarks onto a high resolution 3D model by using the blendshapes.

To accomplish this, process 900 may include "define facial action units (FAU)" 908, where an FAU corresponds to an avatar blendshape and represents the motion of one of the landmarks that forms a facial expression. Thus, for example, one FAU may be the dropping of a jaw to an open mouth position. The difference in motion from low resolution image to low resolution image will reveal the motion of the feature points of the landmarks, and therefore the FAUs. *See for example,* U.S. Patent No. 9,830,728, issued November 28, 2017.

Process 900 may include "use a linear combination to fit the landmarks to the model" 910 and "use blendshape coefficients to combine blendshapes to form facial expression" 912. It has been found that any real-time facial shape can be reconstructed by a linear combination of blend-shapes $\{BS^{(i)}, i = 1..., N\}$, where each $BS^{(i)}$ represents a category of facial deformation such as mouth corner up or wink of an eye, etc. Let $w_i$ denote the linear weight (or coefficient) for a blend-shape $BS^{(i)}$, the tracked facial landmark from the low resolution images $S$ is:

$$S = \sum_{i=1}^{N} w_i BS^{(i)} \tag{1}$$

The value of BS is determined by a mathematic optimization process that finds optimal BS coefficients to combine to fit the shape. To obtain the coefficients $w_i$, a small set of similar blendshapes may be selected by performing a k-Nearest Neighbor (*k*NN) search. Then the coefficients may be computed for these most similar blend-shapes and the rest of the coefficients are set to zero as shown below.

$$S = \sum_{i \in kNN(S)} w_i BS^{(i)} + \sum_{j \notin kNN(S)} 0 \cdot BS^{(j)} \tag{2}$$

Considering speed and computational cost, the coefficient $w_i$ is computed as the normalized inversed distance between input S and $(BS_i)$ as follows:

$$w_i = \begin{cases} \dfrac{1}{\sum_i \sum_k \|S_k - BS_k^{(i)}\|} \cdot \sum_k \left\| S_k - BS_k^{(i)} \right\|, & i \in kNN(S) \\ 0, & otherwise \end{cases} \tag{3}$$

In the above equation, Euclidean distance is used between all landmarks. In this framework, any distance metric can be used, such as Mahalanobis distance etc.

Applying equation (1) performs operations 910 and 912 to combine blendshapes and use the coefficients to fit the landmarks and form a facial expression cloned from the low resolution image. Summing the weighted blendshapes causes an expressed facial shape and effectively provides a value that represents the combination of blendshapes, and from an example set 800 (FIG. 8) of blendshapes, to provide all of the facial landmark characteristics forming a facial expression. Thus, by one form, the landmarks on the detected face and the blendshapes have a 1 to 1 correspondence. The landmarks on the detected face are defined as facial action units (FAUs) that correspond to the blendshapes of the avatar so that the extracted BS coefficients of a detected facial image can be directly transferred to the avatar blendshapes. This results in a high resolution image with the facial expression cloned from the low resolution image.

By the alternative using the 3D high resolution mesh model instead of, or in addition to, the avatar for HR image matching, process 900 may include "warp image(s) to high resolution 3D mesh model" 914 and as constructed previously. Here too, the process may use the feature points of the landmarks of the low resolution image to perform the warping when the model is labeled with landmarks as well. Once the low resolution image is warped to the model, process 900 may include "project HR image of facial expression from the model" 916, and onto a plane to form a high resolution image. The facial expression should be positioned on the image to match the facial pose and head position on the low resolution image.

By yet the third option, the landmarks may be used to "determine HR image closest to low resolution image" 918 when images are being used instead of, or in addition to, a model. This may be performed by applying a SAD or Euclidean distance algorithm between corresponding feature points of the saved HR images and low resolution image until the minimum difference is determined. Thereafter, Process 900 may include "warp HR image to facial expression of low resolution image" 920 to form the high resolution face image. Again, warping may be performed on each triangle in the mesh.

As yet another alternative, the high resolution image from two or more of the methods just described could be combined to refine the image from any one of the other methods. Thus, process 900 optionally may provide "combine image to form one refined high resolution face image" 922. By this form, some combination position is used as a final position among differences in particular feature point positions such as an average for example. By another form, one of the methods, such as the avatar method, may be considered the main method, and is accepted as sufficiently accurate when corresponding feature points on the HR face image of the other methods are within a distance threshold for example, then the avatar feature point locations are maintained. This may be performed with any order of the techniques used here.

The output result, whether from one of the methods or a combination of them, is a high resolution face image that may be about 500 x 600 pixels to 1200 x 1200 pixels (when upscaled 4 to 8 times from a low resolution input image of about 150 x 150 or 150 x 100).

Once the high resolution face image is generated, process 400 now may continue to include "adjust color in high resolution face image" 418. Particularly, the high resolution images used to form the high resolution 3D model and blendshapes have colors that may be formed under different lighting conditions than the low resolution image such that the colors, and in turn the luminance represented by RGB values, of the resulting high resolution image may be incorrect. Thus, the colors from the low resolution face image should be transferred to the high resolution face image to better ensure a realistic image appearance of the face.

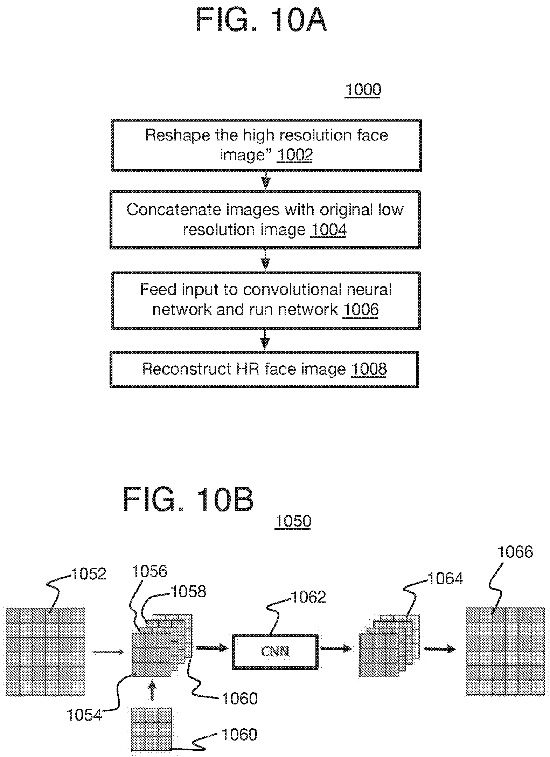

Referring to FIGS. 10A-10B, a process 1000 shown on flow diagram 1050 provides such a transfer by using a machine learning method and specifically a deep learning method that uses a convolutional neural network. Thus, process 1000 may include "reshape the high resolution face image" 1002 to form low resolution, high depth (or multi-channel) images 1054, 1056, and 1058 as shown. This may be represented as:

$$(H, W, 3) \rightarrow (H\backslash scale, W\backslash scale, 3 * scale * scale)$$

where H\scale simply refers to the reduction in the number of pixels in height caused by the division into color channels, and W refers to the width. Thus, if the HR face image is a 600 X 600 gray (single channel) image, then the high resolution image is a H=600, W=600 C=1 and assuming an upscaling factor of 2 for both height and width, the image is reshaped into a 300 x 300 image with 3 color channels by alternatively taking pixels into the different channels. For color images, the same process can be performed separately for each of the input color channels.

Process 1000 then includes "concatenate images with original low resolution image" 1004 which is image 1060 on diagram 1050, and should be the same height and width as the reshaped high resolution image, here 150 x 150. The concatenation is performed by merely adding the low resolution image as an additional channel to the reshaped high resolution image, to form an input tensor as the input data to the neural network. The tensor may be provided to a processor, GPU, or other dedicated neural network hardware.

Process 1000 then may include "feed input to convolutional neural network and run network" 1006, and the neural network may be a fully convolutional NN 1062. This may include two or more layers, including the usual CNN layers with convolutional layers with a ReLU operation after each convolutional layer, pooling layers, normalization layers, and so forth. By one approach, a 19 layer 3 scale U-net architecture can be used to capture both high and low resolution information (*see* O. Ronneberger, et al., "U-net: Convolutional networks for biomedical image segmentation," in NUCCAI (2015)). The structure of the CNN may be determined by experimentation, and the CNN may have many different configurations that would work.

Process 1000 next may include "reconstruct HR face image" 1008 by converting the neural network output back to the high resolution face image size. Here, the output of the neural network is a high depth (multi-channel) image:

$$(H\backslash scale, W\backslash scale, 3 * scale * scale)$$

where the channels correspond to different locations in the high-resolution image.

The (H\scale, W\scale, 3*scale*scale) images are then transformed back into a high resolution image 1064 of the face by rejoining the separate channels in inverse of the separation process to construct a high resolution image that now has colors from the low resolution face images.

In order to train the network, high resolution face images are first obtained. Then the images are down sampled to create the reference low-resolution image and a random color effect is performed on the high resolution image. These effects can include brightening, gamma corrections, adding light gradients, and so forth as some examples. Then given the above two inputs (effects), the network is trained to output the original high resolution image.

Once a color-adjusted high resolution face image is available, process 400 may include "upsample at least part of full image" 420, and this refers to upsampling at least part of the full image that will contain the HR face image but could be the full image. Thus, the image here includes at least the face and body of the person identified in the high resolution face image. The upsampling may be performed by using a generic super-resolution (SR) algorithm, such as a SR neural network, to obtain a high resolution image. By other options, the full 5K image is upsampled at lower temporal rate than the face image for the person (say once every N frames) since the changes in background are not as important and the reconstruction is only preformed on the foreground. By yet another option, the full image is upsampled using bi-linear interpolation. The image may be upsampled from 5K (or other camera resolution) to something like 20K resolution to provide 4 to 8 times upsampling scale. Otherwise, the image may be upsampled to 4K when the cameras provide HD resolution.

Process 400 then may include "blend high resolution face image with high resolution full image" 422, where the pixel data of the high resolution face image replaces the upsampled face image data on the upsampled full image (upsampled by super-resolution). Thus, to create the final frame result, the upsampled face image is blended into the high resolution full image or frame. The blending considers slight differences in shading and color from the images being blended. This may include applying interpolation algorithms that can be determined spatially on a single frame, and/or could include temporal blending over a number of consecutive frames in a sequence to provide for accurate images as well as smooth transitions from one pose to another for example. By one form, Poisson image blending made be used to perform the blending.

The full image or frame now can be used to create virtual view images with more accuracy. By one form, the system may employ the physical camera images adjacent (one of which may include the upsampled face image) to the virtual camera location to project the color onto a point cloud for creating a scene foreground with the goal of rendering an output image.

Otherwise, the upsampled face image may be used directly to create the output image/video.

It will be appreciated that the processes 300, 400, 500, 600, and 900 respectively explained with FIGS. 3-6 and 9 do not necessarily have to be performed in the order shown, nor with all of the operations shown. It will be understood that some operations may be skipped or performed in different orders.

Also, any one or more of the operations of FIGS. 3-6, 9 and 10A-10B may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more processor core(s) may undertake one or more of the operations of the example processes herein in response to program code and/or instructions or instruction sets conveyed to the processor by one or more computer or machine-readable media. In general, a machine-readable medium may convey software in the form of program code and/or instructions or instruction sets that may cause any of the devices and/or systems to perform as described herein. The machine or computer readable media may be a non-transitory article or medium, such as a non-transitory computer readable medium, and may be used with any of the examples mentioned above or other examples except that it does not include a transitory signal per se. It does include those elements other than a signal per se that may hold data temporarily in a "transitory" fashion such as RAM and so forth.

As used in any implementation described herein, the term "module" refers to any combination of software logic, firmware logic and/or hardware logic configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, and/or firmware that stores instructions executed by programmable circuitry. The modules may, collectively or individually, be embodied as circuitry that forms part of a larger system, for example, an integrated circuit (IC), system on-chip (SoC), and so forth. For example, a module may be embodied in logic circuitry for the implementation via software, firmware, or hardware of the coding systems discussed herein.

As used in any implementation described herein, the term "logic unit" refers to any combination of firmware logic and/or hardware logic configured to provide the functionality described herein. The logic units may, collectively or individually, be embodied as circuitry that forms part of a larger system, for example, an integrated circuit (IC), system on-chip (SoC), and so forth. For example, a logic unit may be embodied in logic circuitry for the implementation firmware or hardware of the coding systems discussed herein. One of ordinary skill in the art will appreciate that operations performed by hardware and/or firmware may alternatively be implemented via software, which may be embodied as a software package, code and/or instruction set or instructions, and also appreciate that logic unit may also utilize a portion of software to implement its functionality.

As used in any implementation described herein, the term "component" may refer to a module or to a logic unit, as these terms are described above. Accordingly, the term "component" may refer to any combination of software logic, firmware logic, and/or hardware logic configured to provide the functionality described herein. For example, one of ordinary skill in the art will appreciate that operations performed by hardware and/or firmware may alternatively be implemented via a software module, which may be embodied as a software package, code and/or instruction set, and also appreciate that a logic unit may also utilize a portion of software to implement its functionality.

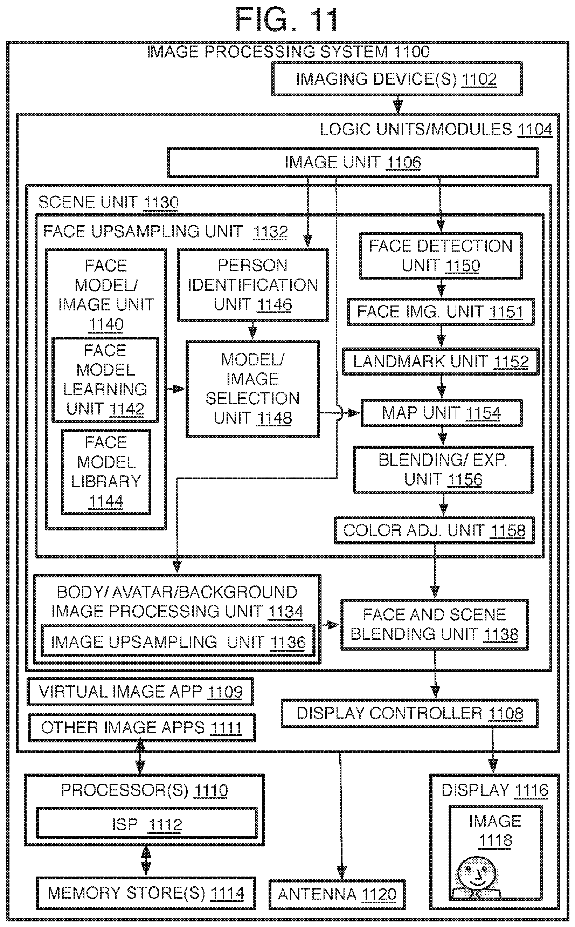

Referring to FIG. 11, an example image processing system 1100 is arranged in accordance with at least some implementations of the present disclosure. In various implementations, the example image processing system 1100 may have one or more imaging devices 1102 to form or receive captured image data, and this may include either one or more cameras such as an array of cameras around an athletic field, stage or other such event location where the cameras should not be placed near the field. Thus, in one form, the image processing system 1100 may be a digital camera or other image capture device that is one of the cameras in an array of the cameras. In this case, the imaging device(s) 1102 may be the camera hardware and camera sensor software, module, or component. In other examples, imaging processing system 1100 may have an imaging device 1102 that includes, or may be, one camera or some or all of the cameras in the array, and logic modules 1104 may communicate remotely with, or otherwise may be communicatively coupled to, the imaging device 1102 for further processing of the image data.

Accordingly, the part of the image processing system 1100 that holds the logic units 1104 and that processes the images may be on one of the cameras or may be on a separate device included in, or entirely forming, the image processing system 1100. Thus, the image processing system 1100 may be a desktop or laptop computer, remote server, or mobile computing device such as a smartphone, tablet, or other device. It also could be or have a fixed function device such as a set top box (cable box or satellite box), game box, or a television. The camera(s) 1102 may be wirelessly communicating, or wired to communicate, image data to the logic units 1104.

In any of these cases, such technology may include a camera such as a digital camera system, a dedicated camera device, web cam, or any other device with a camera, a still camera and so forth for the run-time of the system as well as for model learning and/or image collection for generating predetermined personal image data. The cameras may be RGB cameras or RGB-D cameras, but could be YUV cameras. Thus, in one form, imaging device 1102 may include camera hardware and optics including one or more sensors as well as auto-focus, zoom, aperture, ND-filter, auto-exposure, flash, actuator controls, and so forth. By one form, the cameras may be fixed in certain degrees of freedom, or may be free to move in certain or all directions, as long as the position and optical axis from camera to camera is known so that the cameras can be registered to the same coordinate system.

The logic modules 1104 of the image processing system 1100 may include, or communicate with, an image unit 1106 that performs at least partial processing. Thus, the image unit 1106 may perform pre-processing, decoding, encoding, and/or even post-processing to prepare the image data for transmission, storage, and/or display. It will be appreciated that the pre-processing performed by the image unit 1106 could be modules located on one or each of the cameras, a separate image processing unit 1100, or other location.

In the illustrated example, the logic modules 1104 also may include a scene unit 1130 to provide high resolution images upsampled from lower resolution images used to perform efficient processing of the images. The scene unit 1130 may have a face upsampling unit 1132 with a face model/image unit 1140 to provide the personal 3D avatar and blendshapes, 3D mesh model, and/or personal HR images as described above. A face model learning unit 1142 may be provided to generate a library of high resolution images or blendshapes of possible facial expressions for the face, and stores the images in a model or image library 1144 that may be stored on any practical memory 1114 with sufficient capacity whether RAM, non-volatile, or other type of memory. The model learning unit 1142 may accomplish the generation of the library in a number of different ways as described above.

A person identification unit 1146, may be the same or similar as person identification unit 600, and performs those tasks of recognizing one or more people shown in the images from the cameras as described above. A model/image selection unit 1148 then determines which predetermined personal model or image is to be used for a person recognized on the image(s). The face upsampling unit 1132 also may have a face detection unit 1150 to detect faces in the full images from the camera(s) 1102, a face image unit 1151 to define LR face images for upsampling processing, a landmark unit 1152 to detect and extract facial features, a mapping unit 1154 that then maps the facial expression of the extracted facial features (from the low resolution face image) onto the predetermined personal 3D model (and blendshapes when present) of the person in the image. Alternatively or additionally, the low resolution face image, via the extracted facial features, is matched to a closest high resolution image in the library 1144.

A blending/expression unit 1156 then blends (or warps or projects) the low resolution features to the personal model, or more particularly to a blendshape, or to one of the personal high resolution images resulting in a high resolution face image. A color adjustment unit 1158 then adjusts the color of the resulting high resolution face using machine learning such as CNNs as mentioned above. The resulting output high resolution face image is then provided for blending with the rest of the full image.

Thus, the scene unit 1130 also may have a body/avatar/background image processing unit 1134, and a face and scene blending unit 1138 that perform many of the operations described above to provide a high resolution image with a high resolution face. The body/avatar/background image processing unit 1134 may have its own upsampling unit 1136 to first apply super-resolution techniques to upsample the initially low resolution full image from the camera, as well as perform any other necessary pre-processing to the full image. This full upsampled image may have the background and rest of the body corresponding to the high resolution face image. The face and scene blending unit 1138 then may merge the upsampled full image with the HR face image by replacing the pixel data of the face in the main image with the pixel data of the HR face image (or actually providing some combination or blending of the two at least at the boundaries of the face image). The full image may include an entire scene, or when the body of the person in the full image is treated differently from the background, such as when the body also is based on an avatar, then the face and body may be merged separately, and then the complete avatar or image of the person with the HR face thereon, may be merged with the background.

A display controller 1108 then may control a display 1116 to display the output high resolution images. Otherwise, a virtual image application 1109 may use multiple ones of the images from different perspectives to generate virtual camera view images, which may be displayed to make it appear as if a scene is being rotated as described above. Also, other image applications 1111 may use the images for other programs.

These units may be operated by, or even entirely or partially located at, processor(s) 1110, such as the Intel Atom, and which may include a dedicated image signal processor (ISP) 1112, to perform many of the operations mentioned herein. The logic modules 1104 may be communicatively coupled to the components of the imaging device 1102 in order to receive raw image data. The image processing system 1100 also may have one or more memory stores 1114 which may or may not hold the personal image data including the 3D models, HR images, as well as other image data or logic units mentioned above, and antenna 1120. In one example implementation, the image processing system 1100 may have at least one processor 1110 communicatively coupled to the display, and at least one memory 1114 communicatively coupled to the processor to perform the operations described herein as explained above.

The image unit 1106, which may have an encoder and decoder, and antenna 1120 may be provided to compress and decompress the image date for transmission to and from other devices that may display or store the images. This may refer to transmission of image data among the cameras, and the logic units 1104. Otherwise, the processed image 1118 may be displayed on the display 1116 or stored in memory 1114 for further processing as described above. As illustrated, any of these components may be capable of communication with one another and/or communication with portions of logic modules 1104 and/or imaging device 1102. Thus, processors 1110 may be communicatively coupled to both the image devices 1102 and the logic modules 1104 for operating those components. By one approach, although image processing system 1100, as shown in FIG. 11, may include one particular set of unit or actions associated with particular components or modules, these units or actions may be associated with different components or modules than the particular component or module illustrated here.

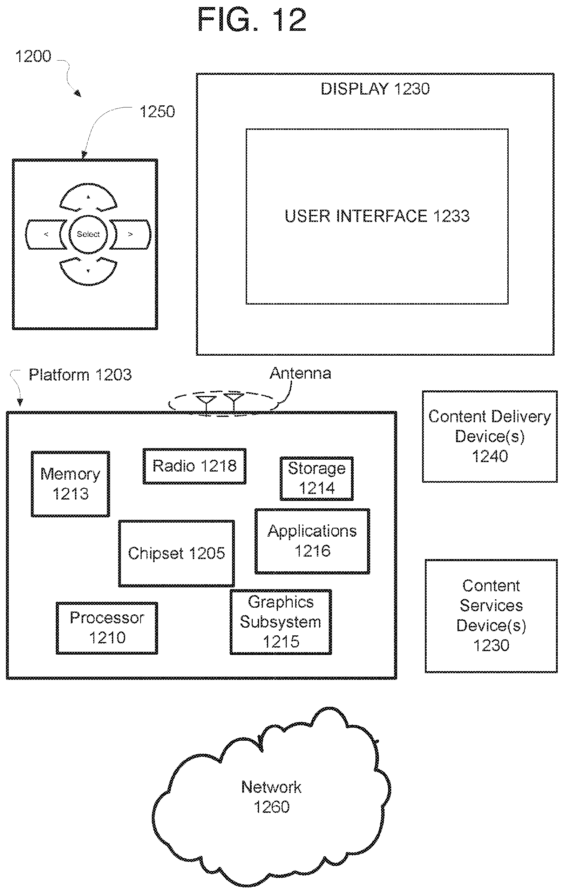

Referring to FIG. 12, an example system 1200 in accordance with the present disclosure operates one or more aspects of the image processing system described herein. It will be understood from the nature of the system components described below that such components may be associated with, or used to operate, certain part or parts of the image processing systems described above including performance of a camera system operation described above. In various implementations, system 1200 may be a media system although system 1200 is not limited to this context. For example, system 1200 may be incorporated into a digital video camera, mobile device with camera or video functions such as an imaging phone, webcam, personal computer (PC), remote server, laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In various implementations, system 1200 includes a platform 1202 coupled to a display 1220. Platform 1202 may receive content from a content device such as content services device(s) 1230 or content delivery device(s) 1240 or other similar content sources. A navigation controller 1250 including one or more navigation features may be used to interact with, for example, platform 1202 and/or display 1220. Each of these components is described in greater detail below.

In various implementations, platform 1202 may include any combination of a chipset 1205, processor 1210, memory 1212, storage 1214, graphics subsystem 1215, applications 1216 and/or radio 1218. Chipset 1205 may provide intercommunication among processor 1210, memory 1212, storage 1214, graphics subsystem 1215, applications 1216 and/or radio 1218. For example, chipset 1205 may include a storage adapter (not depicted) capable of providing intercommunication with storage 1214.

Processor 1210 may be implemented as a Complex Instruction Set Computer (CISC) or Reduced Instruction Set Computer (RISC) processors; x86 instruction set compatible processors, multi-core, or any other microprocessor or central processing unit (CPU). In various implementations, processor 1210 may be dual-core processor(s), dual-core mobile processor(s), and so forth.

Memory 1212 may be implemented as a volatile memory device such as, but not limited to, a Random Access Memory (RAM), Dynamic Random Access Memory (DRAM), or Static RAM (SRAM).

Storage 1214 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 1214 may include technology to increase the storage performance enhanced protection for valuable digital media when multiple hard drives are included, for example.

Graphics subsystem 1215 may perform processing of images such as still or video for display. Graphics subsystem 1215 may be a graphics processing unit (GPU) or a visual processing unit (VPU), for example, and may or may not include an image signal processor (ISP). An analog or digital interface may be used to communicatively couple graphics subsystem 1215 and display 1220. For example, the interface may be any of a High-Definition Multimedia Interface, Display Port, wireless HDMI, and/or wireless HD compliant techniques. Graphics subsystem 1215 may be integrated into processor 1210 or chipset 1205. In some implementations, graphics subsystem 1215 may be a stand-alone card communicatively coupled to chipset 1205.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further implementations, the functions may be implemented in a consumer electronics device.

Radio 1218 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 1218 may operate in accordance with one or more applicable standards in any version.

In various implementations, display 1220 may include any television type monitor or display. Display 1220 may include, for example, a computer display screen, touch screen display, video monitor, television-like device, and/or a television. Display 1220 may be digital and/or analog. In various implementations, display 1220 may be a holographic display. Also, display 1220 may be a transparent surface that may receive a visual projection. Such projections may convey various forms of information, images, and/or objects. For example, such projections may be a visual overlay for a mobile augmented reality (MAR) application. Under the control of one or more software applications 1216, platform 1202 may display user interface 1222 on display 1220.

In various implementations, content services device(s) 1230 may be hosted by any national, international and/or independent service and thus accessible to platform 1202 via the Internet, for example. Content services device(s) 1230 may be coupled to platform 1202 and/or to display 1220. Platform 1202 and/or content services device(s) 1230 may be coupled to a network 1260 to communicate (e.g., send and/or receive) media information to and from network 1260. Content delivery device(s) 1240 also may be coupled to platform 1202 and/or to display 1220.

In various implementations, content services device(s) 1230 may include a cable television box, personal computer, network, telephone, Internet enabled devices or appliance capable of delivering digital information and/or content, and any other similar device capable of unidirectionally or bidirectionally communicating content between content providers and platform 1202 and/display 1220, via network 1260 or directly. It will be appreciated that the content may be communicated unidirectionally and/or bidirectionally to and from any one of the components in system 1200 and a content provider via network 1260. Examples of content may include any media information including, for example, video, music, medical and gaming information, and so forth.

Content services device(s) 1230 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 1202 may receive control signals from navigation controller 1250 having one or more navigation features. The navigation features of controller 1250 may be used to interact with user interface 1222, for example. In implementations, navigation controller 1250 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 1250 may be replicated on a display (e.g., display 1220) by movements of a pointer, cursor, focus ring, or other visual indicators displayed on the display. For example, under the control of software applications 1216, the navigation features located on navigation controller 1250 may be mapped to virtual navigation features displayed on user interface 1222, for example. In implementations, controller 1250 may not be a separate component but may be integrated into platform 1202 and/or display 1220. The present disclosure, however, is not limited to the elements or in the context shown or described herein.

In various implementations, drivers (not shown) may include technology to enable users to instantly turn on and off platform 1202 like a television with the touch of a button after initial boot-up, when enabled, for example. Program logic may allow platform 1202 to stream content to media adaptors or other content services device(s) 1230 or content delivery device(s) 1240 even when the platform is turned "off." In addition, chipset 1205 may include hardware and/or software support for 8.1 surround sound audio and/or high definition (7.1) surround sound audio, for example. Drivers may include a graphics driver for integrated graphics platforms. In implementations, the graphics driver may comprise a peripheral component interconnect (PCI) Express graphics card.

In various implementations, any one or more of the components shown in system 1200 may be integrated. For example, platform 1202 and content services device(s) 1230 may be integrated, or platform 1202 and content delivery device(s) 1240 may be integrated, or platform 1202, content services device(s) 1230, and content delivery device(s) 1240 may be integrated, for example. In various implementations, platform 1202 and display 1220 may be an integrated unit. Display 1220 and content service device(s) 1230 may be integrated, or display 1220 and content delivery device(s) 1240 may be integrated, for example. These examples are not meant to limit the present disclosure.

In various implementations, system 1200 may be implemented as a wireless system, a wired system, or a combination of both. When implemented as a wireless system, system 1200 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 1900 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 1202 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The implementations, however, are not limited to the elements or in the context shown or described in FIG. 12.

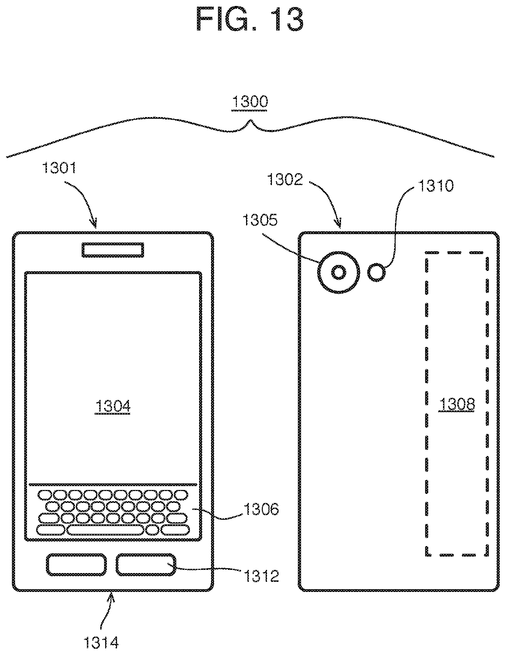

Referring to FIG. 13, a small form factor device 1300 is one example of the varying physical styles or form factors in which systems 1100 or 1200 may be embodied. By this approach, device 1100 may be implemented as a mobile computing device 1300 having wireless capabilities. A mobile computing device may refer to any device having a processing system and a mobile power source or supply, such as one or more batteries, for example.

As described above, examples of a mobile computing device may include a digital still camera, digital video camera, mobile devices with camera or video functions such as imaging phones, webcam, personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various implementations, for example, a mobile computing device may be implemented as a smart phone capable of executing computer applications, as well as voice communications and/or data communications. Although some implementations may be described with a mobile computing device implemented as a smart phone by way of example, it may be appreciated that other implementations may be implemented using other wireless mobile computing devices as well. The implementations are not limited in this context.

As shown in FIG. 13, device 1300 may include a housing with a front 1301 and a back 1302. Device 1300 includes a display 1304, an input/output (I/O) device 1306, and an integrated antenna 1308. Device 1300 also may include navigation features 1312. I/O device 1306 may include any suitable I/O device for entering information into a mobile computing device. Examples for I/O device 1306 may include an alphanumeric keyboard, a numeric keypad, a touch pad, input keys, buttons, switches, microphones, speakers, voice recognition device and software, and so forth. Information also may be entered into device 1300 by way of microphone 1314, or may be digitized by a voice recognition device. As shown, device 1300 may include a camera 1305 (e.g., including at least one lens, aperture, and imaging sensor) and a flash 1310 integrated into back 1302 (or elsewhere) of device 1300. The implementations are not limited in this context.

Various forms of the devices and processes described herein may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an implementation is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one implementation may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense.

## Claims

1. A computer-implemented method of (300) image processing, comprising: obtaining (302) image data of at least one image (200),

   a portion of the at least one image comprising a person's face;
   automatically identifying (304) the person (204) in the at least one image (200) comprising detecting a portion of the image data associated with the person's face (206) on the image, the detected image data associated with predetermined personal identification information; and **characterized by**:

   forming (308) a higher resolution face image comprising using predetermined personal image data of the identified person (204) to increase the resolution of at least the portion of the at least one image having the person's face; and
   blending (310) the higher resolution face image with a background based on the at least one image;
   wherein the predetermined personal image data is associated with the predetermined personal identification information, the predetermined personal identification information comprising a textual character, picture or logo worn by the person (204) having the face (206) and visible in the at least one image.

2. The method (300) of claim 1, wherein the personal identification information further comprises a list of players of a team sport to reduce a number of candidate personal identifications.

3. The method (300) of claim 1 or 2 comprising performing facial recognition algorithms or gait recognition algorithms to reduce a number of candidate personal identifications or confirm a selection of a candidate personal identification.

4. The method (300) of claim 1, 2, or 3 wherein the at least one image (200) is a video sequence of images, and the method comprising tracking motion of a textual character worn by a person providing the face (206) in the at least one image; and identifying the person by using the tracked motion in an image to be upsampled, wherein the textual character is not visible in the image to be upsampled.

5. The method (300) of claim 1, 2, or 3 wherein the at least one image (200) is one image to be upsampled from one camera (106) of a camera array, and the method comprising using an image from a different camera of the camera array to identify a textual character worn by the person in the images wherein the textual character is not visible in the one image to be upsampled.

6. A computer-implemented system (1100) comprising:

   at least one memory (1114) storing image data of at least one camera (106) of an array of cameras (1102); and
   at least one processor (1110) communicatively coupled to the memory (1114) and being arranged to operate by:

   obtaining image data of at least one image (200), a portion of the at least one image comprising a person's face (206);
automatically identifying the person (204) in the at least one image (200) comprising detecting the portion of the image data associated with the person's face (206) on the image, the detected image data associated with predetermined personal identification information; and **characterized in that** the at least one processor (1110) is further arranged to operate by:
forming a higher resolution face image comprising using predetermined personal image data of the identified person to increase the resolution of at least the portion of the at least one image having the person's face; and

blending the higher resolution face image with a background based on the at least one image;
wherein the predetermined personal image data is associated with the predetermined personal identification information, the predetermined personal identification information comprising a textual character, picture or logo worn by the person (204) having the face (206) and visible in the at least one image.

7. The system (1100) of claim 6 wherein the at least one processor (1110) is further arranged to operate by performing at least two of:

(1) generating a plurality of customized base avatar models and personal blendshapes for each model as the predetermined personal image data wherein each model is customized for a different person,
(2) generating a plurality of customized personal 3D mesh models as the predetermined personal image data wherein each model is customized for a different person, and
(3) generating a plurality of sets of pre-obtained high resolution images as the predetermined personal image data wherein each set is customized for a different person; and using at least one of (1), (2), and (3) to refine the position of feature points in the models or sets of high resolution images of another of (1), (2), or (3).

8. A camera array comprising:

cameras (106) pointed toward an event area (102) where people are to be moving in the event area; and
the computer-implemented system of claim 6.

9. The camera array of claim 8 wherein the at least one processor being (1110) arranged to operate by: mapping feature points of landmarks on the at least one image (200) to a facial expression formed by a plurality of personal blendshapes based on a high resolution 3D avatar model as the predetermined personal image data and selected based on an identification of the person identified in the at least one image, and
preferably wherein the at least one processor (1110) being arranged to operate by: forming the plurality of personal blendshapes into a linear combination to clone the landmarks of the at least one image onto the high resolution face image.

10. The camera array of claim 8 wherein the at least one processor being (1110) arranged to operate by:

performing at least two of:

(1) determining a customized base avatar model and personal blendshapes as the predetermined personal image data,
(2) determining a customized 3D mesh model as the predetermined personal image data, and
(3) determining a set of pre-obtained high resolution images as the predetermined personal image data; and

using at least one of (1), (2), and (3) to refine the high resolution face image of another of (1), (2), or (3).

11. At least one non-transitory computer readable medium comprising a plurality of instructions that in response to being executed on a computing device (1100), causes the computing device (1100) to operate by:

obtaining image data of at least one image (200), a portion of the at least one image comprising a person's face (206);
automatically identifying the person (204) in the at least one image (200) comprising detecting the portion of the image data associated with the person's face (206) on the image, the detected image data associated with predetermined personal identification information; and **characterized in that** the instructions to further cause the computing device to operate by:
forming a higher resolution face image comprising using predetermined personal image data of the identified person to increase the resolution of at least the portion of the at least one image having the person's face; and blending the higher resolution face image with a background based on the at least one image;

wherein the predetermined personal image data is associated with the predetermined personal identification information, the predetermined personal identification information comprising a textual character, picture or logo worn by the person (204) having the face (206) and visible in the at least one image.

12. The medium of claim 11 wherein the instructions cause the computing device (1100) to operate by inputting the high resolution face image into a convolutional neural network to adjust colors of the high resolution face image.

13. The medium of claim 11 wherein the instructions cause the computing device to operate by reshaping the high resolution face image into lower resolution color-related images to be input to a convolutional neural network (1062), CNN, to adjust colors of the high resolution face image, and

preferably wherein the medium comprises concatenating an original lower resolution version of the high resolution face image with the lower resolution color-related images to be input to the CNN (1062), and more preferably wherein the color-related images have the same height and width as the original lower resolution version of the high resolution face image.

**Patentansprüche**

1. Computerimplementiertes Verfahren zur (300) Bildverarbeitung, umfassend:

Erhalten (302) von Bilddaten mindestens eines Bildes (200), wobei ein Teil des mindestens einen Bildes das Gesicht einer Person umfasst;
automatisches Identifizieren (304) der Person (204) in dem mindestens einen Bild (200), umfassend Detektieren eines Teils der Bilddaten, die mit dem Gesicht (206) der Person assoziiert sind, auf dem Bild, wobei die detektierten Bilddaten mit vorbestimmten persönlichen Identifikationsinformationen assoziiert sind; und **gekennzeichnet durch**:

Bilden (308) eines Gesichtsbildes mit höherer Auflösung, das Verwenden vorbestimmter persönlicher Bilddaten der identifizierten Person (204) umfasst, um die Auflösung von mindestens dem Teil des mindestens einen Bildes, das das Gesicht der Person aufweist, zu erhöhen; und
Mischen (310) des Gesichtsbildes mit höherer Auflösung mit einem Hintergrund basierend auf dem mindestens einen Bild;
wobei die vorbestimmten persönlichen Bilddaten mit den vorbestimmten persönlichen Identifikationsinformationen assoziiert sind, wobei die vorbestimmten persönlichen Identifikationsinformationen ein Textzeichen, ein Bild oder ein Logo umfassen, das von der Person (204) getragen wird, die das Gesicht (206) aufweist und in dem mindestens einen Bild sichtbar ist.

2. Verfahren (300) nach Anspruch 1, wobei die persönlichen Identifikationsinformationen ferner eine Liste von Spielern eines Mannschaftssports umfassen, um eine Anzahl von möglichen persönlichen Identifikationen zu reduzieren.

3. Verfahren (300) nach Anspruch 1 oder 2, umfassend Durchführen von Gesichtserkennungsalgorithmen oder Gangerkennungsalgorithmen, um eine Anzahl von möglichen persönlichen Identifikationen zu reduzieren oder eine Auswahl einer möglichen persönlichen Identifikation zu bestätigen.

4. Verfahren (300) nach Anspruch 1, 2 oder 3, wobei das mindestens eine Bild (200) eine Videosequenz von Bildern ist und das Verfahren das Verfolgen einer Bewegung eines Textzeichens, das von einer Person getragen wird, die das Gesicht (206) in dem mindestens einen Bild bereitstellt, und Identifizieren der Person durch Verwenden der verfolgten Bewegung in einem Bild, das hochabgetastet werden soll, umfasst, wobei das Textzeichen in dem Bild, das hochabgetastet werden soll, nicht sichtbar ist.

5. Verfahren (300) nach Anspruch 1, 2 oder 3, wobei das mindestens eine Bild (200) ein Bild ist, das von einer Kamera (106) einer Kameraanordnung hochabgetastet werden soll, und wobei das Verfahren das Verwenden eines Bildes von einer anderen Kamera der Kameraanordnung umfasst, um ein Textzeichen zu identifizieren, das von der Person in den Bildern getragen wird, wobei das Textzeichen in dem einen Bild, das hochabgetastet werden soll, nicht sichtbar ist.

**6.** Computerimplementiertes System (1100), umfassend: mindestens einen Speicher (1114), der Bilddaten mindestens einer Kamera (106) einer Anordnung von Kameras (1102) speichert; und mindestens einen Prozessor (1110), der kommunikativ mit dem Speicher (1114) gekoppelt ist und dazu eingerichtet ist, durch Folgendes zu arbeiten:

Erhalten von Bilddaten mindestens eines Bildes (200), wobei ein Teil des mindestens einen Bildes das Gesicht (206) einer Person umfasst;

automatisches Identifizieren der Person (204) in dem mindestens einen Bild (200), umfassend Detektieren eines Teils der Bilddaten, die mit dem Gesicht (206) der Person assoziiert sind, auf dem Bild, wobei die detektierten Bilddaten mit vorbestimmten persönlichen Identifikationsinformationen assoziiert sind; und

**dadurch gekennzeichnet, dass** der mindestens eine Prozessor (1110) ferner dazu eingerichtet ist, durch Folgendes zu arbeiten:

Bilden eines Gesichtsbildes mit höherer Auflösung, das Verwenden vorbestimmter persönlicher Bilddaten der identifizierten Person umfasst, um die Auflösung von mindestens dem Teil des mindestens einen Bildes, das das Gesicht der Person aufweist, zu erhöhen; und

Mischen des Gesichtsbildes mit höherer Auflösung mit einem Hintergrund basierend auf dem mindestens einen Bild;

wobei die vorbestimmten persönlichen Bilddaten mit den vorbestimmten persönlichen Identifikationsinformationen assoziiert sind, wobei die vorbestimmten persönlichen Identifikationsinformationen ein Textzeichen, ein Bild oder ein Logo umfassen, das von der Person (204) getragen wird, die das Gesicht (206) aufweist und in dem mindestens einen Bild sichtbar ist.

**7.** System (1100) nach Anspruch 6, wobei der mindestens eine Prozessor (1110) ferner dazu eingerichtet ist, durch Durchführen von mindestens zwei von Folgendem zu arbeiten:

(1) Erzeugen mehrerer angepasster Basis-Avatar-Modelle und persönlicher Mischformen für jedes Modell als die vorbestimmten persönlichen Bilddaten, wobei jedes Modell für eine andere Person angepasst ist,

(2) Erzeugen mehrerer angepasster persönlicher 3D-Mesh-Modelle als die vorbestimmten persönlichen Bilddaten, wobei jedes Modell für eine andere Person angepasst ist, und

(3) Erzeugen mehrerer Sätze von vorab erhaltenen hochauflösenden Bildern als die vorbestimmten persönlichen Bilddaten, wobei jeder Satz für eine andere Person angepasst ist; und

Verwenden von mindestens einem von (1), (2) und (3), um die Position von Merkmalspunkten in den Modellen oder Sätzen hochauflösender Bilder eines anderen von (1), (2) oder (3) zu verfeinern.

**8.** Kameraanordnung, umfassend:

Kameras (106), die auf einen Ereignisbereich (102) ausgerichtet sind, in dem sich Personen in dem Ereignisbereich bewegen sollen; und

das computerimplementierte Verfahren nach Anspruch 6.

**9.** Kameraanordnung nach Anspruch 8, wobei der mindestens eine Prozessor (1110) dazu eingerichtet ist, durch Folgendes zu arbeiten: Zuordnen von Merkmalspunkten von Landmarken auf dem mindestens einen Bild (200) auf einen Gesichtsausdruck, der durch mehrere persönliche Mischformen gebildet wird, basierend auf einem hochauflösenden 3D-Avatar-Modell als die vorbestimmten persönlichen Bilddaten und ausgewählt basierend auf einer Identifikation der in dem mindestens einen Bild identifizierten Person, und

wobei der mindestens eine Prozessor (1110) vorzugsweise dazu eingerichtet ist, durch Folgendes zu arbeiten: Bilden der mehreren persönlichen Mischformen zu einer linearen Kombination zum Klonen der Landmarken des mindestens einen Bildes auf das hochauflösende Gesichtsbild.

**10.** Kameraanordnung nach Anspruch 8, wobei der mindestens eine Prozessor (1110) dazu eingerichtet ist, durch Folgendes zu arbeiten: Durchführen von mindestens zwei von:

(1) Bestimmen eines angepassten Basis-Avatar-Modells und persönlicher Mischformen als die vorbestimmten persönlichen Bilddaten,

(2) Bestimmen eines angepassten 3D-Mesh-Modells als die vorbestimmten persönlichen Bilddaten, und

(3) Bestimmen eines Satzes von vorab erhaltenen hochauflösenden Bildern als die vorbestimmten persönlichen Bilddaten; und

Verwenden von mindestens einem von (1), (2) und (3), um das hochauflösende Gesichtsbild eines anderen von (1), (2) oder (3) zu verfeinern.

11. Mindestens ein nichtflüchtiges computerlesbares Medium, umfassend mehrere Anweisungen, die in Reaktion auf die Ausführung auf einer Rechenvorrichtung (1100) die Rechenvorrichtung (1100) veranlassen, durch Folgendes zu arbeiten:

Erhalten von Bilddaten mindestens eines Bildes (200), wobei ein Teil des mindestens einen Bildes das Gesicht (206) einer Person umfasst;
automatisches Identifizieren der Person (204) in dem mindestens einen Bild (200), umfassend Detektieren eines Teils der Bilddaten, die mit dem Gesicht (206) der Person assoziiert sind, auf dem Bild, wobei die detektierten Bilddaten mit vorbestimmten persönlichen Identifikationsinformationen assoziiert sind; und **dadurch gekennzeichnet, dass** die Anweisungen ferner bewirken, dass die Rechenvorrichtung arbeitet durch:

Bilden eines Gesichtsbildes mit höherer Auflösung, das Verwenden vorbestimmter persönlicher Bilddaten der identifizierten Person umfasst, um die Auflösung von mindestens dem Teil des mindestens einen Bildes, das das Gesicht der Person aufweist, zu erhöhen; und
Mischen des Gesichtsbildes mit höherer Auflösung mit einem Hintergrund basierend auf dem mindestens einen Bild;
wobei die vorbestimmten persönlichen Bilddaten mit den vorbestimmten persönlichen Identifikationsinformationen assoziiert sind, wobei die vorbestimmten persönlichen Identifikationsinformationen ein Textzeichen, ein Bild oder ein Logo umfassen, das von der Person (204) getragen wird, die das Gesicht (206) aufweist und in dem mindestens einen Bild sichtbar ist.

12. Medium nach Anspruch 11, wobei die Anweisungen bewirken, dass die Rechenvorrichtung (1100) durch Eingeben des hochauflösenden Gesichtsbildes in ein neuronales Faltungsnetz arbeitet, um Farben des hochauflösenden Gesichtsbildes anzupassen.

13. Medium nach Anspruch 11, wobei die Anweisungen bewirken, dass die Rechenvorrichtung durch Umformen des hochauflösenden Gesichtsbildes in farbbezogene Bilder mit niedrigerer Auflösung arbeitet, die in ein neuronales Faltungsnetz (1062), CNN, einzugeben sind, um Farben des hochauflösenden Gesichtsbildes anzupassen, und

wobei das Medium vorzugsweise das Verketten einer ursprünglichen Version mit niedrigerer Auflösung des hochauflösenden Gesichtsbildes mit den farbbezogenen Bildern mit niedrigerer Auflösung, die in das CNN einzugeben sind, umfasst (1062), und
wobei die farbbezogenen Bilder noch bevorzugter die gleiche Höhe und Breite wie die ursprüngliche Version mit niedrigerer Auflösung des hochauflösenden Gesichtsbildes aufweisen.


**Revendications**

1. Procédé mis en œuvre par ordinateur (300) de traitement d'image, comprenant :

l'obtention (302) de données d'image d'au moins une image (200), une partie de l'au moins une image comprenant le visage d'une personne ;
l'identification automatique (304) de la personne (204) dans l'au moins une image (200) y compris la détection d'une partie des données d'image associée au visage (206) de la personne sur l'image, les données d'image détectées étant associées à des informations d'identification personnelle prédéterminées ; et **caractérisé par** :

la formation (308) d'une image de visage de plus haute résolution y compris l'utilisation de données d'image personnelles prédéterminées de la personne identifiée (204) pour augmenter la résolution d'au moins la partie de l'au moins une image ayant le visage de la personne ; et
le fusionnement (310) de l'image de visage de plus haute résolution avec un arrière-plan sur la base de l'au moins une image ;
dans lequel les données d'image personnelles prédéterminées sont associées aux informations d'identification personnelle prédéterminées, les informations d'identification personnelle prédéterminées comprenant un caractère textuel, une illustration, ou un logo porté par la personne (204) ayant le visage (206) et visible dans l'au moins une image.

**2.** Procédé (300) de la revendication 1, dans lequel les informations d'identification personnelles comprennent en outre une liste de joueurs d'un sport d'équipe pour réduire un nombre d'identifications personnelles candidates.

**3.** Procédé (300) de la revendication 1 ou 2, comprenant la réalisation d'algorithmes de reconnaissance faciale ou d'algorithmes de reconnaissance d'allure pour réduire un nombre d'identifications personnelles candidates ou confirmer une sélection d'une identification personnelle candidate.

**4.** Procédé (300) de la revendication 1, 2, ou 3, dans lequel l'au moins une image (200) est une séquence vidéo d'images, et le procédé comprenant le suivi d'un mouvement d'un caractère textuel porté par une personne fournissant le visage (206) dans l'au moins une image ; et l'identification de la personne en utilisant le mouvement suivi dans une image devant être suréchantillonnée, dans lequel le caractère textuel n'est pas visible dans l'image devant être suréchantillonnée.

**5.** Procédé (300) de la revendication 1, 2, ou 3, dans lequel l'au moins une image (200) est une image devant être suréchantillonnée provenant d'une caméra (106) d'une série de caméras, et le procédé comprend l'utilisation d'une image provenant d'une différente caméra de la série de caméras pour identifier un caractère textuel porté par la personne dans les images, dans lequel le caractère textuel n'est pas visible dans l'une image devant être suréchantillonnée.

**6.** Système mis en œuvre par ordinateur (1100), comprenant :

au moins une mémoire (1114) stockant des données d'image d'au moins une caméra (106) d'une série de caméras (1102) ; et
au moins un processeur (1110) couplé en communication à la mémoire (1114) et agencé pour fonctionner en effectuant les opérations suivantes :

l'obtention de données d'image d'au moins une image (200), une partie de l'au moins une image comprenant le visage (206) d'une personne ;
l'identification automatique de la personne (204) dans l'au moins une image (200) y compris la détection de la partie des données d'image associée au visage (206) de la personne sur l'image, les données d'image détectées étant associées à des informations d'identification personnelle prédéterminées ; et **caractérisé en ce que** l'au moins un processeur (1110) est en outre agencé pour fonctionner en effectuant les opérations suivantes :

la formation d'une image de visage de plus haute résolution y compris l'utilisation de données d'image personnelles prédéterminées de la personne identifiée pour augmenter la résolution d'au moins la partie de l'au moins une image ayant le visage de la personne ; et
le fusionnement de l'image de visage de plus haute résolution avec un arrière-plan sur la base de l'au moins une image ;
dans lequel les données d'image personnelles prédéterminées sont associées aux informations d'identification personnelle prédéterminées, les informations d'identification personnelle prédéterminées comprenant un caractère textuel, une illustration, ou un logo porté par la personne (204) ayant le visage (206) et visible dans l'au moins une image.

**7.** Système (1100) de la revendication 6, dans lequel l'au moins un processeur (1110) est en outre agencé à fonctionner en effectuant l'opération de la réalisation d'au moins deux opérations parmi :

(1) la génération d'une pluralité de modèles d'avatar de base personnalisés et de formes fusionnées personnelles pour chaque modèle en tant que données d'image personnelles prédéterminées, dans lequel chaque modèle est personnalisé pour une personne différente,
(2) la génération d'une pluralité de modèles de maillage 3D personnalisés en tant que données d'image personnelles prédéterminées, dans lequel chaque modèle est personnalisé pour une personne différente, et
(3) la génération d'une pluralité d'ensembles d'images de haute résolution pré-obtenues en tant que données d'image personnelles prédéterminées, dans lequel chaque ensemble est personnalisé pour une personne différente ; et

l'utilisation d'au moins une opération parmi (1), (2), et (3) pour raffiner la position de points de caractéristiques dans les modèles ou ensembles d'image de haute résolution d'une autre opération parmi (1), (2), ou (3).

**8.** Série de caméras, comprenant :

des caméras (106) dirigées vers une zone d'événement (102) où des personnes seront en mouvement dans la zone d'événement ; et
le système mis en œuvre par ordinateur de la revendication 6.

**9.** Série de caméras de la revendication 8, dans laquelle l'au moins un processeur (1110) est agencé pour fonctionner en effectuant : la mise en correspondance de points de caractéristiques de repères sur l'au moins une image (200) sur une expression faciale formée par une pluralité de formes fusionnées personnelles sur la base d'un modèle d'avatar 3D de haute résolution en tant que données d'image personnelles prédéterminées et sélectionné sur la base d'une identification de la personne identifiée dans l'au moins une image, et
de préférence dans laquelle l'au moins un processeur (1110) est agencé pour fonctionner en effectuant :
la formation de la pluralité de formes fusionnées personnelles en une combinaison linéaire pour cloner les repères de l'au moins une image sur l'image de visage de haute résolution.

**10.** Série de caméras de la revendication 8, dans laquelle l'au moins un processeur (1110) est agencé pour fonctionner en effectuant :
la réalisation d'au moins deux opérations parmi :

(1) la détermination d'un modèle d'avatar de base personnalisé et de formes fusionnées personnelles en tant que données d'image personnelles prédéterminées,
(2) la détermination d'un modèle de maillage 3D personnalisé en tant que données d'image personnelles prédéterminées, et
(3) la détermination d'un ensemble d'images de haute résolution pré-obtenues en tant que données d'image personnelles prédéterminées ; et

l'utilisation d'au moins une opération parmi (1), (2), et (3) pour raffiner l'image de visage de haute résolution d'une autre opération parmi (1), (2), ou (3).

**11.** Support(s) non transitoire(s) lisible(s) par ordinateur, comprenant une pluralité d'instructions qui, en réponse à leur exécution sur un dispositif informatique (1100), amènent le dispositif informatique (1100) à fonctionner en effectuant les opérations suivantes :

l'obtention de données d'image d'au moins une image (200), une partie de l'au moins une image comprenant le visage (206) d'une personne ;
l'identification automatique de la personne (204) dans l'au moins une image (200) y compris la détection de la partie des données d'image associée au visage (206) de la personne sur l'image, les données d'image détectées étant associées à des informations d'identification personnelle prédéterminées ; et caractérisé(s) en ce que les instructions doivent en outre amener le dispositif informatique à fonctionner en effectuant les opérations suivantes :

la formation d'une image de visage de plus haute résolution y compris l'utilisation de données d'image personnelles prédéterminées de la personne identifiée pour augmenter la résolution d'au moins la partie de l'au moins une image ayant le visage de la personne ; et
le fusionnement de l'image de visage de plus haute résolution avec un arrière-plan sur la base de l'au moins une image ;
dans le(s)quel(s) les données d'image personnelles prédéterminées sont associées aux informations d'identification personnelle prédéterminées, les informations d'identification personnelle prédéterminées comprenant un caractère textuel, une illustration, ou un logo porté par la personne (204) ayant le visage (206) et visible dans l'au moins une image.

**12.** Support de la revendication 11, dans lequel les instructions amènent le dispositif informatique (1100) à fonctionner en effectuant l'entrée de l'image de visage de haute résolution dans un réseau neuronal convolutif pour ajuster des couleurs de l'image de visage de haute résolution.

**13.** Support de la revendication 11, dans lequel les instructions amènent le dispositif informatique à fonctionner en effectuant la remise en forme de l'image de visage de haute résolution en des images connexes à couleur de plus basse résolution devant être entrées dans un réseau neuronal convolutif (1062), « Convolutional Neural Network » CNN, pour ajuster des couleurs de l'image de visage de haute résolution, et

de préférence dans lequel le support comprend la concaténation d'une version de plus basse résolution d'origine de l'image de visage de haute résolution avec les images connexes à couleur de plus basse résolution devant être entrées dans le CNN (1062), et

mieux encore, dans lequel les images connexes à couleur ont les mêmes hauteur et largeur que la version de plus basse résolution d'origine de l'image de visage de haute résolution.

# FIG. 1

# FIG. 2A

# FIG. 2B

# FIG. 3

300

```
┌─────────────────────────────────────────────┐
│   OBTAIN IMAGE DATA OF AT LEAST ONE IMAGE     │
│ COMPRISING AN IMAGE OF A PERSON'S FACE 302    │
└─────────────────────────────────────────────┘
```

```
┌─────────────────────────────────────────────────┐
│ AUTOMATICALLY IDENTIFY THE PERSON IN THE AT LEAST ONE │
│ IMAGE COMPRISING DETECTING IMAGE DATA ON THE IMAGE │
│  ASSOCIATED WITH THE PERSON'S FACE AND ASSOCIATED  │
│   WITH PREDETERMINED PERSONAL IDENTIFICATION       │
│              INFORMATION 304                       │
│  ┌─────────────────────────────────────────────┐  │
│  │ WHEREIN THE PERSONAL IDENTIFICATION INFORMATION │
│  │ IS A NUMBER WORN BY THE PERSON HAVING THE FACE │
│  │   AND VISIBLE IN THE AT LEAST ONE IMAGE 306   │  │
│  └─────────────────────────────────────────────┘  │
└─────────────────────────────────────────────────┘
```

```
┌─────────────────────────────────────────────────┐
│       FORM A HIGHER RESOLUTION FACE IMAGE         │
│   COMPRISING USING PERSONAL IMAGE DATA OF THE     │
│ IDENTIFIED PERSON TO INCREASE THE RESOLUTION OF   │
│  AT LEAST A PORTION OF THE AT LEAST ONE IMAGE     │
│          HAVING THE PERSON'S FACE 308             │
└─────────────────────────────────────────────────┘
```

```
┌─────────────────────────────────────────────────┐
│       BLEND THE HIGHER RESOLUTION FACE            │
│   IMAGE WITH A BACKGROUND ON A VERSION            │
│        OF THE AT LEAST ONE IMAGE                  │
│                   310                             │
└─────────────────────────────────────────────────┘
```

# FIG. 4

400

OBTAIN AT LEAST ONE RAW FULL IMAGE 405

PRE-PROCESS IMAGE DATA 406

DETECT FACE IN IMAGE 412

FORM LR FACE IMAGE 413

IDENTIFY PERSON 408

OFFLINE

OBTAIN PERSONAL HIGH RESOLUTION FACE IMAGES 402

DETECT LANDMARKS ON FACE 414

UPSAMPLE AT LEAST PART OF FULL IMAGE 420

MAP AND BLEND EXPRESSION TO MODEL TO FORM H.R. FACE IMAGE 416

SELECT PERSONAL MODEL 410

GENERATE PERSONAL IMAGE DATA 404

ADJUST COLOR IN HIGH RESOLUTION FACE IMAGE 418

BLEND HR FACE IMAGE WITH FULL IMAGE 422

HIGH RESOLUTION FRAME

# FIG. 5   500

OBTAIN H.R. IMAGES OF PERSON'S FACE 502

FORM A 3D GEOMETRIC MODEL OF THE PERSON'S FACE 504

EXTRACT FEATURES FROM IMAGES 512

MAINTAIN LIBRARY OF IMAGES TO COVER A VARIETY OF FACIAL EXPRESSIONS 510

FORM TEXTURE MAP BY SYNTHESIZING IMAGES TO MODEL TO FORM A BASIC 3D FACE MODEL 506

MATCH FEATURES IMAGE TO IMAGE 514

FORM A PLURALITY OF BLENDSHAPES WITH VARYING FACIAL EXPRESSIONS 508

CREATE 3D POINT CLOUD 516

FORM 3D MESH PERSONAL MODEL 518

FORM COMBINATION PERSONAL MODELS 520

LABEL FEATURES ON MODEL(S)/IMAGE(S) 522

STORE PERSONAL MODEL AND/OR IMAGES 524

STORE AVATAR BASE MODEL AND BLENDSHAPES AS THE 3D FACE MODEL 526

# FIG. 6

PERSON IDENTIFICATION UNIT 600

Predetermined Personal
Identification Information
Unit 602

Team List Library
610

Facial Recognition
Unit 606

Gait Recognition
Unit 608

Player Number
Identification Unit 604

Player Number
Tracking Unit 616

Initial Candidates
Selection Unit 612

Candidate Selection
Unit 614

Final Model
Selection

29

## FIG. 7    700

702

## FIG. 8    800

802

# FIG. 9 900

Start

Detect Landmarks 902

Extract Facial Motion Points on Image 904

Map the facial landmarks form the low resolution image to high resolution facial expressions 906

Define facial action units (FAU) 908

Use a linear combination of blendshapes to fit the landmarks to the model 910

Use blendshape coefficients to combine blendshapes to form facial expression 912

Warp image(s) to High Resolution 3D mesh model 914

Determine HR image closest to low resolution image 918

Project HR image of facial expression from the model 916

Warp HR image to facial expression of low resolution image 920

High Resolution Face Image

Combine images to form one refined high resolution face image 922

Output High Resolution Face Image

# FIG. 10A

1000

Reshape the high resolution face image" 1002

↓

Concatenate images with original low resolution image 1004

↓

Feed input to convolutional neural network and run network 1006

↓

Reconstruct HR face image 1008

# FIG. 10B

1050

# FIG. 11

IMAGE PROCESSING SYSTEM 1100

IMAGING DEVICE(S) 1102

LOGIC UNITS/MODULES 1104

IMAGE UNIT 1106

SCENE UNIT 1130

FACE UPSAMPLING UNIT 1132

FACE MODEL/ IMAGE UNIT 1140

FACE MODEL LEARNING UNIT 1142

FACE MODEL LIBRARY 1144

PERSON IDENTIFICATION UNIT 1146

MODEL/ IMAGE SELECTION UNIT 1148

FACE DETECTION UNIT 1150

FACE IMG. UNIT 1151

LANDMARK UNIT 1152

MAP UNIT 1154

BLENDING/ EXP. UNIT 1156

COLOR ADJ. UNIT 1158

BODY/ AVATAR/BACKGROUND IMAGE PROCESSING UNIT 1134

IMAGE UPSAMPLING UNIT 1136

FACE AND SCENE BLENDING UNIT 1138

VIRTUAL IMAGE APP 1109

OTHER IMAGE APPS 1111

DISPLAY CONTROLLER 1108

PROCESSOR(S) 1110

ISP 1112

DISPLAY 1116

IMAGE 1118

MEMORY STORE(S) 1114

ANTENNA 1120

# FIG. 12

1200

1250

DISPLAY 1230

USER INTERFACE 1233

Platform 1203

Antenna

Content Delivery Device(s) 1240

Memory 1213

Radio 1218

Storage 1214

Chipset 1205

Applications 1216

Processor 1210

Graphics Subsystem 1215

Content Services Device(s) 1230

Network 1260

# FIG. 13

**REFERENCES CITED IN THE DESCRIPTION**

**Patent documents cited in the description**

- US 2017255827 A1
- US 2014245367 A1
- WO 2017143407 A1
- US 20130201187 A1
- US 20170039750 A
- US 9361510 B
- US 9830728 B

**Non-patent literature cited in the description**

- **STEFANO MESSELODI et al.** Scene text recognition and tracking to identify athletes in sport videos. *MULTIMEDIA TOOLS AND APPLICATIONS.*, 20 September 2011, vol. 63, ISSN 1380-7501, 521-545
- **GEORGE, A. S. et al.** An efficient gait recognition system for human identification using neural networks. *International Journal of Innovations Advancement in Computer Science*, 2017, vol. 6 (5), 76-83
- **O. RONNEBERGER et al.** U-net: Convolutional networks for biomedical image segmentation. *NUCCAI*, 2015